# EUROPÄISCHE PATENTSCHRIFT

(11) **EP 4 452 534 B1**
(45) Veröffentlichungstag und Bekanntmachung des Hinweises auf die Patenterteilung: **04.03.2026**
(21) Anmeldenummer: 22840609.6
(22) Anmeldetag: 19.12.2022
(51) Int. Cl.: B21J 15/32, B23P 19/00, B25B 23/04

(54) **ZUFÜHRVORRICHTUNG**
FEEDING DEVICE
DISPOSITIF D'ALIMENTATION

(30) Priorität: 22.12.2021 DE 102021134404
(43) Veröffentlichungstag der Anmeldung: 30.10.2024
(73) Patentinhaber: TOX PRESSOTECHNIK GmbH & Co. KG, 88250 Weingarten (DE)
(72) Erfinder: BADENT, Michael, 88250 Weingarten (DE); FISCHBACH, Axel, 88212 Ravensburg (DE); FREUDLING, Frederik, 88069 Tettnang (DE); KALETTA, Patrick, 88048 Friedrichshafen (DE)
(74) Vertreter: RavensPAT Patentanwälte Partnerschaft mbB
(86) Internationale Anmeldenummer: PCT/EP2022/086617
(87) Internationale Veröffentlichungsnummer: WO 2023/117881

(56) Entgegenhaltungen:
- DE-A1- 102013 006 315
- JP-A- 2007 222 924
- JP-A- H 081 454
- US-A- 4 074 425
- US-A1- 2002 153 227

## Beschreibung

### Stand der Technik

Es sind Vorrichtungen oder Einrichtungen zum Zuführen von kleinteiligen Elementen wie zum Beispiel Fügelementen wie Funktions- oder Verbindungselementen wie Nieten aus einer bereitgestellten Menge von Elementen zu einem Abnehmer der Elemente bekannt. Die Elemente werden zum Beispiel einem Verarbeitungsgerät bzw. Werkzeug zugeführt, wobei beispielsweise zur Abholung einzelner Elemente aus einer Element-Vorlagemenge und zur automatisierten Elementen-Zuführung ein verdichtetes Gas zum Beispiel Druckluft als Transportmittel bzw. als Energieträger zum Transport der Elemente verwendet wird. Druckluft kommt in Pneumatiksystemen beispielsweise mit einer Zylinder-Kolben-Baueinheit zum Einsatz, welche die Druckluft als Energieträger nutzen. Die Bereitstellung der Druckluft wird bei Industrieanwendungen zum Beispiel zentral bereitgestellt und den unterschiedlichen Abnehmern zugeführt. Hierfür werden Verdichter bzw. Kompressoren eingesetzt.

Nachteilig bei vielen Druckluft-Anwendungen ist, dass Druckluft als Energieträger inneffizient ist und Verluste im Bereich bis über 90 Prozent auftreten. Verluste ergeben sich **z. B.** als Kompressionsverluste, Leckageverluste oder Netzverluste bzw. Strömungsverluste wie Leitungsnetzdruckverluste.

### Aufgabe und Vorteile der Erfindung

Aufgabe der vorliegenden Erfindung ist es, eine Zuführvorrichtung bereitzustellen, welche die diskutierten Nachteile vermeidet oder bei welcher diese minimiert sind. Diese Aufgabe wird durch die unabhängigen Ansprüche gelöst.

Vorteilhafte Ausgestaltungen der Erfindung sind in den abhängigen Ansprüchen definiert.

Die Erfindung betrifft eine Zuführvorrichtung für Elemente, wobei die Elemente zu einer Anschluss-Stelle der Zuführvorrichtung bewegbar sind, wobei die Zuführvorrichtung als eine separat positionierbare Peripherie-Einheit zur Versorgung eines Verarbeitungsgeräts mit Elementen ausgestaltet ist, wobei die Elemente über die Anschluss-Stelle aus der Zuführvorrichtung ausschleusbar sind und wobei die Anschluss-Stelle für eine

Verbindung mit einer an die Zuführvorrichtung anschließbaren hohlen Transportleitung ausgebildet ist, so dass im verbundenen Zustand der Transportleitung die Elemente in der hohlen Transportleitung von der Anschluss-Stelle bis zum von der Zuführvorrichtung beabstandeten Verarbeitungsgerät transportierbar sind, wobei die Elemente mittels einer Gas-Strömung transportierbar sind.

Die Zuführvorrichtung weist eine Gasstrom-Erzeugungseinrichtung auf, welche die Gas-Strömung derart bereitstellt, dass aufgrund der Gas-Strömung die Elemente von der Anschluss-Stelle aufgrund der mit der Gasstrom-Erzeugungseinrichtung bereitgestellten Gas-Strömung transportierbar sind, wobei die Zuführvorrichtung in einem Aufstellungsraum vorhanden ist, wobei die Gasstrom-Erzeugungseinrichtung ausgebildet ist, Luft aus der Umgebung der Zuführvorrichtung im Aufstellungsraum der Zuführvorrichtung anzusaugen, um die Gas-Strömung bereitzustellen.

Zum Beispiel ist die Anschluss-Stelle für eine insbesondere gasdichte Verbindung eines Leitungsabschnitts der Zuführvorrichtung mit einer an die Zuführvorrichtung anschließbaren hohlen Transportleitung ausgebildet. Beispielsweise sind der Leitungsabschnitt und die Transportleitung einstückig an der Anschluss-Stelle miteinander verbunden, zum Beispiel durch einen einheitlichen hohlen Schlauch gebildet.

Beispielsweise weist die Zuführvorrichtung einen Vorratsbehälter zur Aufnahme einer Mehrzahl von Elementen auf.

Beispielsweise sind mit der von der Gasstrom-Erzeugungseinrichtung bereitgestellten Gas-Strömung die Elemente von einer Element-Übergabestelle durch den Leitungsabschnitt an die Anschluss-Stelle transportierbar. Beispielsweise sind mit der von der Gasstrom-Erzeugungseinrichtung bereitgestellten Gas-Strömung die Elemente aus dem Leitungsabschnitt hinaus transportierbar, zum Beispiel in die Transportleitung und weiter innerhalb der Transportleitung.

Die Erfindung geht aus von einer Zuführvorrichtung mit einem Vorratsbehälter zur Aufnahme einer Mehrzahl von Elementen, wobei die Zuführvorrichtung einen hohlen Leitungsabschnitt aufweist, durch welchen die Elemente von einer Element-Übergabestelle, an welcher die Elemente in den Leitungsabschnitt einbringbar sind, zu einer Anschluss-Stelle der Zuführvorrichtung bewegbar sind, wobei die Zuführvorrichtung als eine separat positionierbare Peripherie-Einheit zur Versorgung eines Verarbeitungsgeräts mit Elementen ausgestaltet ist, wobei die im Leitungsabschnitt bewegbaren Elemente über die Anschluss-Stelle aus der Zuführvorrichtung ausschleusbar sind und wobei die Anschluss-Stelle für eine insbesondere gasdichte Verbindung des Leitungsabschnitts mit einer an die Zuführvorrichtung anschließbaren hohlen Transportleitung ausgebildet ist, so dass im verbundenen Zustand des Leitungsabschnitts und der Transportleitung die Elemente in der hohlen Transportleitung von der Anschluss-Stelle bis zum von der Zuführvorrichtung beabstandeten Verarbeitungsgerät transportierbar sind, wobei die Elemente mittels einer Gas-Strömung im Leitungsabschnitt bis zur Anschluss-Stelle transportierbar sind. Aufgrund der in dem Leitungsabschnitt herrschenden Gas-Strömung werden die Elemente bewegt, wobei bei an den Leitungsabschnitt angeschlossener Transportleitung, sind die Elemente von der Anschluss-Stelle in die Transportleitung weiterbewegbar und gelangen in der Transportleitung bis zum Verarbeitungsgerät. Demgemäß setzt sich zum Beispiel die Gas-Strömung bei verbundener Transportleitung aus dem Leitungsabschnitt weiter in die Transportleitung. Die Gas-Strömung stellt die treibende Kraft zum Transport der Elemente in dem Leitungsabschnitt und in der Transportleitung in eine Transportrichtung der Elemente bereit. Insbesondere erfolgt der Weitertransport innerhalb der Transportleitung aufgrund der mit der Zuführvorrichtung bereitgestellten Gas-Strömung. Die Gas-Strömung in dem Leitungsabschnitt setzt sich von dem Leitungsabschnitt fort, bzw. aus diesem heraus weiter, bis in die Transportleitung und entlang der gesamten Länge der Transportleitung, insbesondere bis zum Verarbeitungsgerät.

Die Elemente werden in der Zuführvorrichtung aufgrund der Gas-Strömung von dieser an der Element-Übergabestelle mitgenommen und im Leitungsabschnitt in einer Förderrichtung innerhalb und entlang des Leitungsabschnitts weiterbewegt. Mit seiner Bewegungsenergie des jeweiligen Elements an der Anschluss-Stelle bewegen sich die Elemente kontinuierlich weiter innerhalb und entlang der Transportleitung bis zum Verarbeitungsgerät.

Die Zuführvorrichtung weist zum Beispiel ein Gehäuse auf, das einen Innenraum der Zuführvorrichtung umgibt. Der Innenraum weist bevorzugt eine Seite oder Stelle auf, die offen verbunden ist mit der Umgebungsatmosphäre bzw. der Umgebungsluft in einem Aufstellraum, in dem die Zuführvorrichtung vorhanden ist. Das Gehäuse weist **z. B.** einen Boden, eine Rückwand und vertikale Seitenwände auf.

Im Innenraum der Zuführvorrichtung ist der Vorratsbehälter zur Aufnahme einer Mehrzahl von Elementen maximal zum Beispiel von mehreren hundert einzelnen Elementen angeordnet. Die im Vorratsbehälter vorgelegten Elemente sind **z. B.** wahllos orientiert **z. B.** als Schüttgut im Vorratsbehälter vorhanden. Der Vorratsbehälter bzw. ein Aufnahmevolumen des Vorratsbehälters für die Elemente ist zum Beispiel über ein hohles leitungsartiges Zwischenstück mit einem Sortiertopf verbunden. Das Zwischenstück dient zum Beispiel zum einzelnen Durchlass eines aus dem Aufnahmevolumen kommenden Elements und zur Weiterführung in den Sortiertopf. Im Sortiertopf werden die Elemente einzeln lagerichtig positioniert und in eine an den Sortiertopf anschließende Pufferleitung überführt. In der Pufferleitung erfolgt **z. B.** automatisiert eine Vorlage der Elemente in der jeweils gleichen Orientierung in einer Reihe hintereinander. Aus der Pufferleitung gelangen die Elemente weiter zu einer Vereinzelungseinrichtung für die Elemente. Von der Vereinzelungseinrichtung gelangt jeweils ein vorderstes Element der Reihe an die Element-Übergabestelle. Von der Element-Übergabestelle gelangt das jeweilige Element in den Leitungsabschnitt. Dieser Übergang erfolgt zum Beispiel mit Hilfe der Gas-Strömung. Der Übergang bzw. die Übergangsbewegung der Elemente erfolgt zum Beispiel schwerkraftunterstützt. Die Gas-Strömung ist derart ausgerichtet, dass das jeweilige Element in den Leitungsabschnitt mitgenommen und in diesem entlang transportierbar ist in Richtung bzw. bis zur Anschluss-Stelle und darüber hinaus. Der hohle Leitungsabschnitt ist **z. B.** ein flexibler hohler Schlauch oder zum Beispiel eine hohle feste Leitung.

Beispielsweise ist die Zuführvorrichtung so gestaltet, dass unterschiedliche Arten von Elementen mit der Zuführvorrichtung verarbeitbar bzw. bereitstellbar und mit dem Gas-Strom transportierbar sind. Als Elemente kommen zum Beispiel Verbindungselemente bzw. Fügeelemente wie Schrauben und Nieten, Stanznieten, und/oder Funktionselemente wie Stanz- und Einstanz-und Einpress- und/oder Clinchniet-Elemente, Einpressbolzen und/oder Einpressmuttern in Betracht.

Der Leitungsabschnitt reicht **z. B.** von der Element-Übergabestelle bis beispielsweise zur Anschluss-Stelle. Häufig sind der Leitungsabschnitt und die Transportleitung einstückig, **z. B.** ein hohler Schlauch.

Die Anschluss-Stelle ist andernfalls zum Beispiel durch ein offenes Ende des Leitungsabschnitts gebildet. Die Anschluss-Stelle umfasst zum Beispiel eine Öffnung der Zuführvorrichtung, durch welche im Betrieb Druckluft strömt. Es ist jedoch z.B. vorteilhaft, dass der Leitungsabschnitt und die Transportleitung einstückig zum Beispiel als Zuführschlauch ausgebildet sind. Dann ist die Anschluss-Stelle nicht optisch als solche erkennbar. Die Anschluss-Stelle ist dann eine Stelle im Bereich eines Leitungs-Querschnitts ausgebildet. Der Querschnitt ist dann eine imaginäre Trennstelle zwischen einem Ende des Leitungsabschnitts und einem daran kontinuierlich anschließenden Ende der Transportleitung. Die Anschluss-Stelle wäre zum Beispiel ausbildbar durch ein Durchtrennen des einstückigen Zuführschlauches an der betreffenden Stelle des Querschnitts des Zuführschlauches.

Weiter unten ist erläutert, dass ein erfindungsgemäßes Zuführsystem die Zuführvorrichtung und die Transportleitung gemeinsam umfasst.

Nicht ausgeschlossen ist es, dass die Element-Übergabestelle und die Anschluss-Stelle unmittelbar benachbart sind.

Der Kern der Erfindung liegt darin, dass die Zuführvorrichtung eine Gasstrom-Erzeugungseinrichtung aufweist, welche die Gas-Strömung in dem Leitungsabschnitt derart bereitstellt, dass aufgrund der Gas-Strömung die Elemente von der Element-Übergabestelle durch den Leitungsabschnitt an die Anschluss-Stelle bewegbar sind, wobei die Elemente von der Anschluss-Stelle aufgrund der mit der Gasstrom-Erzeugungseinrichtung bereitgestellten Gas-Strömung aus dem Leitungsabschnitt hinaus transportierbar sind, wobei die Zuführvorrichtung in einem Aufstellungsraum vorhanden ist, wobei die Gasstrom-Erzeugungseinrichtung ausgebildet ist, Luft aus der Umgebung der Zuführvorrichtung im Aufstellungsraum der Zuführvorrichtung anzusaugen, um die Gas-Strömung bereitzustellen. Die Luft wird aus der Umgebung der Zuführvorrichtung angesaugt, insbesondere aus der z.B**.** unmittelbaren Umgebung oder dem Nahbereich der Zuführvorrichtung. Die angesaugte Luft ist insbesondere Luft aus einem Luftvolumen, das die Zuführvorrichtung umgibt. Die angesaugte Luft wird bei arbeitender Gasstrom-Erzeugungseinrichtung von dieser verdichtet und/oder beschleunigt. Die Gasstrom-Erzeugungseinrichtung ist gleichwertig auch als Gasverdichter-Einheit bezeichnet. Die damit bereitgestellte Druckluft strömt weiter an die Element-Übergabestelle und weiter in die Transportleitung, wenn diese angeschlossen ist.

Die Elemente sind im verbundenen Zustand von Leitungsabschnitt und Transportleitung, zum Beispiel bei mit einem Ende an den Leitungsabschnitt angeschlossener Transportleitung, mit der von der Gasstrom-Erzeugungseinrichtung bereitgestellten Gas-Strömung bzw. der Druckluft aus dem Leitungsabschnitt hinaus und weiter transportierbar in der Transportleitung, insbesondere bis zum Verarbeitungsgerät, wobei das andere Ende der Transportleitung an das Verarbeitungsgerät angeschlossen ist.

Mit der vorgeschlagenen Zuführvorrichtung wird eine vorteilhafte dezentrale Druckluftversorgung für die Elementförderung bereitgestellt. Insbesondere lassen sich die Nachteile vermeiden, die andernfalls bei Nutzung eines zentralen Druckluftsystems zur Bereitstellung einer Gas-Strömung in dem Leitungsabschnitt auftreten würden.

Durch die dezentrale Gasstrom-Erzeugungseinrichtung der Zuführvorrichtung sind gegenüber einer zentralen Druckluftversorgung eine Reihe von auftretenden Verlusten reduziert.

Unter einer Gasstrom-Erzeugungseinrichtung ist insbesondere eine Einrichtung zu verstehen, die aus Gas zum Beispiel Luft, beispielsweise Umgebungsluft mit einem üblichen Luftdruck im Druck-Bereich von regelmäßig einem bar, die Gas-Strömung erzeugt. Das Gas bzw. die Luft wird von der Gasstrom-Erzeugungseinrichtung unmittelbar aus der nahen Umgebung der Zuführvorrichtung bzw. im Nahbereich der Zuführvorrichtung angesaugt. Es wird insbesondere keine von einer nicht zur Zuführvorrichtung gehörigen dezentralen Druckluftquelle bereitgestellte Druckluft verwendet. Die Luft wird von der Gasstrom-Erzeugungseinrichtung mit einem Umgebungsdruck-Niveau der Luft angesaugt und die Gasströmung mit einem zum Umgebungsdruck erhöhten Druckniveau erzeugt. Unter einer Gasstrom-Erzeugungseinrichtung ist **z. B.** keine Einrichtung zu verstehen, wie **z. B.** eine Drosseleinrichtung zur Druckreduzierung einer zuvor erzeugten Druckluft mit erhöhtem Druck gegenüber der Atmosphäre, welche ein Druckgas bzw. Druckluft mit erhöhtem Druck auf ein niedrigeres Druckniveau bringt. Die Gasstrom-Erzeugungseinrichtung dient vielmehr zur Druckerhöhung von **z. B.** Luft aus der natürlich vorhandenen atmosphärischen Umgebungsluft im Aufstellungsraum der Zuführvorrichtung zum Beispiel um die Luft mit der Gasstrom-Erzeugungseinrichtung zu verdichten und/oder zu beschleunigen.

Die Gasstrom-Erzeugungseinrichtung ist zum Beispiel ausschließlich genau einer Zuführvorrichtung zugehörig. Zum Beispiel ist die Gasstrom-Erzeugungseinrichtung **z. B.** genau eine Gasstrom-Erzeugungseinrichtung für die Erzeugung der Gas-Strömung für eine dazugehörige Zuführvorrichtung ausgebildet. Vorzugsweise erfolgt mit genau einer Gasstrom-Erzeugungseinrichtung die Versorgung genau einer Zuführvorrichtung mit Druckluft bzw. mit der Gas-Strömung.

Grundsätzlich kann die Gasstrom-Erzeugungseinrichtung genau eine Maschine wie **z. B.** genau einen Verdichter bzw. Kompressor umfassen. Die Gasstrom-Erzeugungseinrichtung kann alternativ genau zwei oder genau drei oder mehr als drei Verdichter aufweisen, die jeweils einzeln aus angesaugter Umgebungsluft die Gas-Strömung bereitstellen. Die zwei, drei oder mehr als drei Maschinen der Gasstrom-Erzeugungseinrichtung können auch jeweils eine Gas-Strömung erzeugen und die einzelnen Gas-Strömungen, mit **z. B.** jeweils einem Gas-Volumenstrom, können dann zusammengeschaltet werden zur Bereitstellung der Gas-Strömung.

Druckluftanwendungen weisen grundlegende Vorteile gegenüber anderen Energieträgern auf. Bei der Druckluft-Förderung von beispielsweise vereinzelten Elementen über hohle Leitungen wie Schläuche und dergleichen weist die Verwendung von Druckluft als Fördermedium Vorteile auf. Beispielsweise zeichnet sich die Element-Förderung mit Druckluft durch eine vergleichsweise geringe Klemmneigung der Elemente untereinander und/oder an Wandabschnitten der Leitung aus. Außerdem wird durch die Gasströmung vorteilhaft begleitend **z. B.** Abrieb und Schmutz aus dem Leitungsabschnitt ohne Zusatzaufwand ausgetragen. Schließlich führt z.B**.** eine Störung an einem zum Beispiel mittigen Wegstreckenabschnitt entlang des Druckluft-Förderweges wie zum Beispiel eine Leckage in dem Leitungsabschnitt oder in der Transportleitung nicht zwangsweise zu einer Unterbrechung der Elementen-Förderung.

Bei Druckluftnetzen mit zentraler Drucklufterzeugung und -weiterleitung sind regelmäßig zum Beispiel weitreichende Leitungen und Verrohrungen nötig, welche mit Einbauten wie zum Beispiel Druck-Behältern verbunden sind. Dabei treten Druckverluste auf unterschiedliche Weise auf, die an einer Vielzahl von Stellen möglich sind. Neben Kompressionsverlusten wirken sich beispielsweise auch noch netzbedingte Druckverluste wie Leckageverluste nachteilig aus.

Zum Beispiel sind Kompressionsverluste druckabhängig, wobei in bekannten Drucksystemen mit zentraler Druckluftversorgung häufig ein für sämtliche angeschlossene unterschiedliche Anwendungen universelles und damit teils überdimensioniertes Druckniveau herrscht. Eine damit einhergehende Drosselung des Drucks zum Beispiel für Anwendungen, welche eine korrekte Fördergeschwindigkeit der Elemente benötigen, führt zu den erwähnten Verlusten.

Mit der Erfindung muss vorteilhaft nicht verzichtet werden auf die Vorteile der Nutzung von Druckluft, da Verluste minimiert sind. Bei der Förderung von beispielsweise vereinzelten Elementen über hohle Leitungen wie Schläuche und dergleichen weist die Verwendung von Druckluft als Fördermedium Vorteile gegenüber anderen Fördertechniken, die ohne Druckluft arbeiten, auf. Beispielsweise eine vergleichsweise geringe Klemmneigung und die Mitnahme von **z. B.** Abrieb und Schmutz aus der Druckluft-Leitung.

Gemäß der Erfindung wird die Gas- bzw. die Luft-Strömung direkt in der Zuführvorrichtung bzw. Zuführanordnung erzeugt und nicht aus einem sonstigen von außen heranreichenden Druckluftsystem wie zum Beispiel einer zentralen Druckluftversorgung. Die Zuführvorrichtung weist insbesondere keine Versorgungsschnittstelle für eine dezentrale Druckluftversorgung der Zuführvorrichtung auf bzw. kann auf eine solche verzichten. Die Zuführvorrichtung weist dementsprechend vorteilhaft beispielsweise keinen Druckluftanschluss bzw. keinen Drucklufteingang auf.

Die Gasstrom-Erzeugungseinrichtung ist zum Beispiel innerhalb eines Gehäuseracks der Zuführvorrichtung untergebracht. Die Gasstrom-Erzeugungseinrichtung ist alternativ außen an einer Außenseite der Zuführvorrichtung vorhanden. Insbesondere ist die Gasstrom-Erzeugungseinrichtung innerhalb eines von einer Umbauung oder einem Gehäuse der Zuführvorrichtung umgebenen Innenraums der Zuführvorrichtung vorhanden. Der Innenraum der Zuführvorrichtung ist offen an einer Stelle oder an einer Seite zur Umgebung z. b. zum umgebenden Raum oder zur Atmosphäre. Die Zuführvorrichtung weist keinen **z. B.** Anschluss für eine Zuführung von Druckluft von außen auf. Eine entfernt von der Zuführvorrichtung hergestellte verdichtete Druckluft ist nicht notwendig bzw. es wird auf diese verzichtet. Die Zuführvorrichtung benötigt keine Druckluft, die von außen z. B. über eine zentrale Druckluftversorgung zum Beispiel über eine Zuführleitung bzw. Druckluft-Leitung an die Zuführvorrichtung angeschlossen ist und Druckluft von außen an die Zuführvorrichtung herangeführt.

Die Gasstrom-Erzeugungseinrichtung ist zum Beispiel im Bereich bzw. im Aufstellungsraum vorhanden, in dem die Zuführvorrichtung aufgestellt bzw. vorhanden ist.

Alternativ zur Unterbringung der Gasstrom-Erzeugungseinrichtung innerhalb eines Gehäuses der Zuführvorrichtung ist die Gasstrom-Erzeugungseinrichtung entfernt aber im gleichen Aufstellungsraum wie die Zuführvorrichtung untergebracht. Die Gasstrom-Erzeugungseinrichtung ist beispielsweise von der restlichen Teileinheit der Zuführvorrichtung entfernt und über eine Verbindungs- bzw. eine Gasleitung zur Führung der Gas-Strömung mit der restlichen Teileinheit der Zuführvorrichtung verbunden.

Die Gasstrom-Erzeugungseinrichtung ist alternativ über eine Gasleitung zur Führung der Gas-Strömung von der Gasstrom-Erzeugungseinrichtung zur restlichen Teileinheit der Zuführvorrichtung verbunden. Die Gasstrom-Erzeugungseinrichtung ist zum Beispiel in einem Umkreis von bis zu 10 Metern von der restlichen Teileinheit der Zuführvorrichtung entfernt. Die Gasstrom-Erzeugungseinrichtung ist in einem Umkreis von bis zu zum Beispiel 8 Metern, in einem Umkreis von bis zu zum Beispiel 6 Metern, in einem Umkreis von bis zu zum Beispiel 4 Metern, in einem Umkreis von bis zu zum Beispiel 2 Metern, von der restlichen Teileinheit der Zuführvorrichtung entfernt.

Es wird dabei Luft auf Umgebungsdruckniveau von der Gasstrom-Erzeugungseinrichtung angesaugt. Die Gasstrom-Erzeugungseinrichtung weist hierfür beispielsweise eine Ansaugeinrichtung auf, um ein Gasvolumens wie ein Umgebungsluftvolumen anzusaugen. Die Gasstrom-Erzeugungseinrichtung weist zum Beispiel einen Axialverdichter und/oder einen Radialverdichter auf.

Mit der vor Ort in bzw. an der Zuführvorrichtung erzeugten Gas-Strömung, die in den Leitungsabschnitt einströmt, zum Beispiel über eine Luftstrom-Schleuse, **z. B.** eine Ventilanordnung, wird im Leitungsabschnitt eine gerichtete Gas-Strömung in Richtung zur Anschluss-Stelle erzeugt. Die Elemente im Leitungsabschnitt werden vom Gas umströmt bzw. vom Gas-Strom umgeben. Die gerichtete Gas-Strömung nimmt die Elemente in dem Leitungsabschnitt mit und bildet sich weiter bis in die Transportleitung.

Die an die Zuführvorrichtung an der Anschluss-Stelle anschließende Transportleitung gehört nicht zur Zuführvorrichtung.

Vorzugsweise weisen der Leitungsabschnitt und die Transportleitung die gleich Innenform und/oder den gleichen Innendurchmesser auf.

Der Leitungsabschnitt und die Transportleitung weisen **z. B.** den gleichen Innen- bzw. Hohlraum auf.

Die Zuführvorrichtung bildet beispielsweise eine bewegbare zum Beispiel eine mit unterseitigen Rollen versehene Einheit wie eine Peripherie-Einheit. Die Zuführvorrichtung ist eine Peripherie-Einheit mit gutem Handling, so dass die Zuführvorrichtung auf einem festen und ebenen Untergrund von einer Person bewegbar bzw. fahrbar ist zur Positionierung in dem Nutz- bzw. Arbeitsbereich. Die Zuführvorrichtung ist zum Beispiel eine separat positionierbare Peripherie-Einheit, so dass eine räumliche Position der Zuführvorrichtung relativ zum Verarbeitungsgerät variabel einrichtbar ist. Die Peripherie-Einheit ist insbesondere unabhängig von der Position des Verarbeitungsgeräts aufstellbar. Es muss lediglich eine ausreichende Länge der Transportleitung gegeben sein.

Gemäß der vorliegenden Erfindung ist die Gasstrom-Erzeugungseinrichtung ausgebildet, auf einer Auslassseite der Gasstrom-Erzeugungseinrichtung eine Gas-Strömung auf einem Niederdruck-Niveau mit einem Absolut-Gasdruck zwischen 1,03 bar und 1,50 bar bereitzustellen. Damit werden Energieverluste aufgrund von höheren Drücken des bereitgestellten Gases minimiert.

Die Erhöhung des Gasdrucks durch eine thermische Maschine für kompressible Medien wie Gas bzw. Luft wird durch die Kenngröße π des Druckverhältnisses beschrieben. Die Kenngröße π beschreibt das Verhältnis des Gas-Druckes auf einer Druckseite, der Gasstrom-Erzeugungseinrichtung zu dem Gas-Druck auf einer Ansaugseite der Gasstrom-Erzeugungseinrichtung.

Beispielsweise weist das von der Gasstrom-Erzeugungseinrichtung angesaugte Gas einen mittleren Umgebungsdruck auf. Beispielsweise weist das von der Gasstrom-Erzeugungseinrichtung angesaugte Gas einen Ausgangsdruck auf. Der Ausgangsdruck des Gases herrscht auf der Eingangs- wie der Ansaugseite der Gasstrom-Erzeugungseinrichtung.

Beispielsweise weist das beschleunigte Gas auf der Druckseite einen Ausgangsdruck auf. Der Ausgangsdruck herrscht auf der Ausgangsseite der Gasstrom-Erzeugungseinrichtung.

Zum Beispiel ist die Gasstrom-Erzeugungseinrichtung derart auf eine Form und/oder eine Größe der zu transportierenden Elemente abgestimmt, dass sich die Elemente in der Transportleitung mit einer Geschwindigkeit zwischen 3 Meter pro Sekunde bzw. 3 m/s und 30 m/s bewegen. Zum Beispiel ist der Ausgangsdruck der von der Gasstrom-Erzeugungseinrichtung erzeugten Gas-Strömung auf eine Form und/oder Größe der zu transportierenden Elemente abgestimmt. Zum Beispiel ist der Ausgangsdruck der von der Gasstrom-Erzeugungseinrichtung erzeugten Gas-Strömung auf die Art der Elemente und einen inneren Querschnitt der Transportleitung abgestimmt. Zum Beispiel ist der Ausgangsdruck der von der Gasstrom-Erzeugungseinrichtung erzeugten Gas-Strömung auf eine Form und/oder Größe der zu transportierenden Elemente derart abgestimmt, dass sich ein Element in der Transportleitung mit einer Geschwindigkeit zwischen 3 Meter pro Sekunde bzw. 3 m/s und 30 m/s bewegt. Zum Beispiel bewegt sich ein Element in der Transportleitung mit einer Geschwindigkeit zwischen 15 und 20 m/s.

Zum Beispiel arbeitet die Gasstrom-Erzeugungseinrichtung wie z. B. ein Ventilator oder ein Gebläse mit einer Kenngröße π des Druckverhältnisses zwischen 1,0 und 1,5.

Zum Beispiel wird mit der Gasstrom-Erzeugungseinrichtung kein höherer Druck des Gases auf der Druckseite und damit in einem System umfassend die Zuführvorrichtung erzeugt, als für den Transport der Elemente benötigt wird. Die Elemente sind dabei mit der von der Gasstrom-Erzeugungseinrichtung erzeugten Gas-Strömung transportierbar. Beispielsweise findet keine Drosselung eines von einer zentralen Druckversorgung vergleichsweise hohen Drucks auf einen Druck statt, der für die jeweilige Anwendung tatsächlich gebraucht wird. Ein Energieverlust wird vermieden. Beispielsweise ist zudem kein Speicher für das druckseitig von der Gasstrom-Erzeugungseinrichtung bereitgestellte Gas mit einem vergleichsweise hohen Druck erforderlich.

Beispielsweise (nicht gemäß der vorliegenden Erfindung) ist die Gasstrom-Erzeugungseinrichtung ausgebildet, ein Druckverhältnis π in einem Bereich von 1,0 bis ≤ 4 bereitzustellen. Erfindungsgemäß ist die Gasstrom-Erzeugungseinrichtung ausgebildet, ein Druckverhältnis π in einem Bereich von 1,03 bis ≤ 1,5 bereitzustellen.

Beispielsweise (nicht gemäß der vorliegenden Erfindung) ist die Gasstrom-Erzeugungseinrichtung ausgebildet, ein Druckverhältnis π in einem Bereich von 1,03 bis ≤ 3,5 bereitzustellen oder ein Druckverhältnis π in einem Bereich von 1,03 bis ≤ 3,0 bereitzustellen oder ein Druckverhältnis π in einem Bereich von 1,03 bis ≤ 2,5 bereitzustellen oder ein Druckverhältnis π in einem Bereich von 1,03 bis ≤ 2,0 bereitzustellen oder, gemäß der vorliegenden Erfindung, ein Druckverhältnis π in einem Bereich von 1,03 bis ≤ 1,5 bereitzustellen.

Beispielsweise umfasst die Gasstrom-Erzeugungseinrichtung ein Gebläse oder einen Ventilator.

Beispielsweise erzielt ein Gebläse bezogen auf seine Leistung mittlere Volumenströme mit einem mittleren Druckverhältnis π. Beispielsweise erzielt ein Ventilator bezogen auf seine Leistung hohe Volumenströme mit einem niedrigen Druckverhältnis π.

Beispielsweise umfasst die Gasstrom-Erzeugungseinrichtung genau ein Gebläse. Beispielsweise (nicht gemäß der vorliegenden Erfindung) umfasst die Gasstrom-Erzeugungseinrichtung ein Gebläse, das ein Druckverhältnis π zwischen 1,1 bis ≤ 4 bereitstellt.

Beispielsweise ist das Gebläse radial aufgebaut. Beispielsweise ist das Gebläse axial aufgebaut. Beispielsweise umfasst die Gasstrom-Erzeugungseinrichtung ein Radialgebläse oder ein Axialgebläse. Beispielsweise ist die Gasstrom-Erzeugungseinrichtung ein Gebläse. Beispielsweise ist die Gasstrom-Erzeugungseinrichtung ein Radialverdichter wie zum Beispiel ein Radialgebläse. Beispielsweise ist die Gasstrom-Erzeugungseinrichtung ein Axialverdichter wie zum Beispiel ein Axialgebläse.

Beispielsweise ist das Gebläse einstufig oder mehrstufig. Beispielsweise weist die Gasstrom-Erzeugungseinrichtung wie das Gebläse auf einer Saugseite des Gebläses ein Filterorgan auf, wie z. B. eine Filtereinrichtung, zum Beispiel umfassend ein Filtermedium oder eine Filterschicht.

Beispielsweise weist das Gebläse zur Gasstromführung saugseitig eine Saugleitung auf und druckseitig eine Druckleitung auf. Saugseitig und/oder druckseitig des Gebläses weist die jeweilige Saug- bzw. Druckleitung einen Leitungsquerschnitt auf, der dem 0,5 fachen bis zum 3-fachen Leitungsquerschnitt der Transportleitung von der Zuführvorrichtung zum Verarbeitungsgerät entspricht. Zum Beispiel weist die Saugleitung und die Druckleitung einen Leitungsquerschnitt von mindestens 30 Quadratmillimeter (mm²) auf. Zum Beispiel weist die Saugleitung und die Druckleitung einen Leitungsquerschnitt von mindestens 50 Quadratmillimeter (mm²) auf.

Beispielsweise weist das Gebläse eine klassische Lüfterkennlinie oder eine klassische Gebläsekennlinie auf, bei welcher der Volumenstrom den größten Energieanteil einfordert.

Beispielsweise weist das Gebläse eine elektrische Leistungsaufnahme zwischen 50 Watt (W) und 1500 Watt auf, zum Beispiel von 500 Watt (W) auf. Beispielsweise regelt sich die Leistungsaufnahme im Wesentlichen über die Gebläsekennlinie selbst. Alternativ kann die Leistungsaufnahme indirekt beeinflusst werden, zum Beispiel über einen Tachometer, dessen erfasste Werte auslesbar und einer Steuerung bereitstellbar sind, zum Beispiel zur Steuerung einer Drehzahl des Gebläses.

Beispielsweise nimmt das Gebläse einen Bauraum ein, welcher zumindest angenähert quader- oder würfelförmig ist und beispielsweise im Bereich von 200 mm x 200 mm x 200 mm liegt.

Beispielsweise umfasst die Gasstrom-Erzeugungseinrichtung genau einen Ventilator. Zum Beispiel ist ein Ventilator eine fremd angetrieben Strömungsmaschine, die mittels eines rotierenden Laufrades ein gasförmiges Medium fördert.

Beispielsweise umfasst die Gasstrom-Erzeugungseinrichtung einen Ventilator, der ein Druckverhältnis π zwischen 1,0 bis ≤ 1,1 bereitstellt. Beispielsweise ist die Gasstrom-Erzeugungseinrichtung ein Ventilator. Beispielsweise ist die Gasstrom-Erzeugungseinrichtung ein Axialventilator.

Beispielsweise ist die Gasstrom-Erzeugungseinrichtung ein Radialventilator.

Beispielsweise wird für kleinere zu transportierende Elemente ein höheres Druckverhältnis π von der Gasstrom-Erzeugungseinrichtung bereitgestellt, zum Beispiel mittels eines Radialgebläses. Alternativ ist eine Reihenschaltung mehrerer Ventilatoren oder mehrerer Gebläse verwendbar. Zum Beispiel sind zwei oder mehr Ventilatoren oder zwei oder mehr Gebläse wie Axialgebläse in Reihe geschaltet verwendbar.

Beispielsweise wird für größere zu transportierende Elemente ein niedrigeres Druckverhältnis π von der Gasstrom-Erzeugungseinrichtung bereitgestellt, zum Beispiel mittels eines Axialgebläses oder eines Ventilators.

Beispielsweise fördert die Gasstrom-Erzeugungseinrichtung ein Gas wie z. B. Luft von einer Ansaugseite der Gasstrom-Erzeugungseinrichtung zu einer Druckseite der Gasstrom-Erzeugungseinrichtung. Auf der Ansaugseite der Gasstrom-Erzeugungseinrichtung herrscht ein Ansaugdruck, zum Beispiel mit einem saugseitigen Druck des Gases auf der Ansaugseite von circa 1 bar.

Außerdem wird das mit der Gasstrom-Erzeugungseinrichtung geförderte Gas wie z. B. Luft von der Ansaugseite zur Druckseite der Gasstrom-Erzeugungseinrichtung beschleunigt.

Ein normaler Luftdruck weist einen normalen Druck, beispielsweise einen mittleren Luftdruck von 1013,25 mbar auf, bezogen auf Meereshöhe. Der Luftdruck an einem Ort hängt beispielsweise von der Temperatur des Gases und der Höhenlage des Ortes ab.

Beispielsweise wird zur Berechnung des Druckverhältnisses π ein Luftdruck von 1013,25 mbar als ein Bezugsluftdruck in der Umgebung der Zuführvorrichtung bzw. der Gasstrom-Erzeugungseinrichtung herangezogen. Beispielsweise wird der Luftdruck von 1013,25 mbar als Ansaugdruck festgelegt.

Beispielsweise umfasst die Gasstrom-Erzeugungseinrichtung ein Gebläse, das einen Ausgangs-Volumenstrom bis zu 860 Liter/Minute (l/min) erzeugt.

Beispielsweise umfasst die Gasstrom-Erzeugungseinrichtung zwei oder mehr als zwei Ventilatoren, die in Reihe geschaltet sind. Damit kann mit mehreren zum Beispiel gleichartigen oder unterschiedlichen Ventilatoren ein gewünschtes Ausgangsdruckniveau erzielt werden, das über einem druckseitigen Niveau bzw. das über einem Ausgangsdruckniveau liegt, das von einem einzelnen Ventilator erreichbar ist.

Beispielsweise umfasst die Gasstrom-Erzeugungseinrichtung zwei oder mehr als zwei Gebläse, die in Reihe geschaltet sind. Damit kann mit mehreren zum Beispiel gleichartigen oder unterschiedlichen Gebläsen ein gewünschtes Ausgangsdruckniveau erzielt werden, das über einem druckseitigen Niveau bzw. das über einem Ausgangsdruckniveau liegt, das von einem einzelnen Gebläse erreichbar ist.

Beispielsweise weist die Gasstrom-Erzeugungseinrichtung, wie ein Ventilator oder ein Gebläse, einen elektrischen Antrieb wie einen elektrischen Motor auf, der mit Niederspannung betreibbar ist, beispielsweise mit einer elektrischen Spannung von 24 Volt oder 48 Volt. Der elektrische Motor ist beispielsweise ein bürstenloser Gleichstrommotor.

Vorteilhaferweise umfasst die Gasstrom-Erzeugungseinrichtung eine Gaskompressionseinheit zur Bereitstellung der Gas-Strömung. Die Gaskompressionseinheit ist beispielsweise integraler Bestandteil der Zuführvorrichtung. Die Gaskompressionseinheit ist beispielsweise in ihren Leistungsdaten einstellbar bzw. veränderbar. Mit der Gaskompressionseinheit lässt sich Gas wie Luft aus der unmittelbaren Umgebung der Zuführvorrichtung bzw. der Gaskompressionseinheit, also Umgebungsluft, welche die Zuführvorrichtung umgibt, von der Gaskompressionseinheit ansaugen und verdichten. Die Auslegung bzw. Ausbildung der Gaskompressionseinheit ist vorteilhaft abstimmbar auf die Rahmenbedingungen bzw. das vorliegenden Anforderungsprofil der Elementförderung. Dabei sind z. B. Reibungseinflüsse bzw. - verluste beim Elementen-Transport zu berücksichtigen. Die Ansaugung und Verdichtung der Luft erfolgt zeitlich und in den Kennwerten exakt abgestimmt auf die Anwendung und am Ort der Nutzung der Druckluft. Dies ist verlustminimierend und damit wirtschaftlich bzw. ökologisch vorteilhaft.

Insbesondere ist die Gaskompressionseinheit abgestimmt, eine über die Zeit variable Gas-Strömung bereitzustellen. Damit ist die Nutzung der Gas-Strömung flexibel möglich. Auch eine gleichbleibende bzw. kontinuierlich gleiche bzw. nicht variable Gasströmung ist möglich. Das mit der Gas-Strömung bereitgestellte Druckniveau kann durch die Einstellung der Gaskompressionseinheit variabel bereitgestellt werden und/oder gleichbleibend.

Es ist überdies vorteilhaft, dass die Gasstrom-Erzeugungseinrichtung eine Gaskompressionseinheit nach dem Turboverdichter-Prinzip zur Bereitstellung der Gas-Strömung umfasst. Die Gaskompressionseinheit zum Beispiel ein Turboverdichter oder Turbokompressor ist eine Strömungsmaschine, die z. B. als ein Radialkompressor oder ein Axialkompressor ausgebildet ist. Der Turbokompressor weist ein rotierendes Kompressorteil auf, das in einem Kompressorgehäuse gelagert ist. Der Turbokompressor arbeitet in der physikalischen Umkehrung einer Turbine.

Beispielsweise umfasst die Gasstrom-Erzeugungseinrichtung eine Gaskompressionseinheit zur Bereitstellung einer in dem Leitungsabschnitt druckseitig erzeugten Gas-Strömung. Die Gaskompressionseinheit arbeitet zum Beispiel nach dem Turboverdichter-Prinzip bzw. auf Basis des Turboverdichter-Prinzips. Die Elemente werden von druckseitig aus der Gasstrom-Erzeugungseinrichtung ausgetretenen Druckluft umströmt und dadurch mitgenommen in dem Leitungsabschnitt.

Vorteilhafterweise umfasst die Gasstrom-Erzeugungseinrichtung beispielsweise eine Gaskompressionseinheit zur Bereitstellung einer in der Leitung saugseitig erzeugten Gas-Strömung. Die Gaskompressionseinheit arbeitet zum Beispiel nach dem Turboverdichter-Prinzip bzw. auf Basis des Turboverdichter-Prinzips. Die Elemente werden von saugseitig in die Gasstrom-Erzeugungseinrichtung nachfolgend eintretender Luft umströmt und dadurch mitgenommen in dem Leitungsabschnitt.

Nach einer beispielhaften Ausbildung umfasst die Gasstrom-Erzeugungseinrichtung eine Gaskompressionseinheit mit einem Radialverdichter zur Bereitstellung der Gas-Strömung, wobei die Gaskompressionseinheit nach dem Turboverdichter-Prinzip arbeitet. Damit ist die Gas-Strömung flexibel anpassbar.

Weiter wird vorgeschlagen, dass die Gasstrom-Erzeugungseinrichtung zum Beispiel eine Gaskompressionseinheit mit einem Axialverdichter zur Bereitstellung der Gas-Strömung umfasst, wobei die Gaskompressionseinheit nach dem Turboverdichter-Prinzip arbeitet. Damit ist die Gas-Strömung flexibel anpassbar.

Vorteilhafterweise umfasst die Gasstrom-Erzeugungseinrichtung eine Gaskompressionseinheit mit einem mehrstufigen Verdichter, wobei die Gaskompressionseinheit nach dem Turboverdichter-Prinzip arbeitet. Ein Druckniveau der Gas-Strömung ist damit vorgebbar, zum Beispiel abhängig von der Anzahl der Stufen des Verdichters.

Nach eine beispielhaften Modifikation ist eine übergeordnete Kontrolleinheit zur Kontrolle einer Leistungsstufe der Gasstrom-Erzeugungseinrichtung vorhanden.

Die Kontrolleinheit dient zum Beispiel insbesondere zur Kontrolle einer vorgebbaren bzw. anpassbaren und/oder einstellbaren Leistungsstufe der Gasstrom-Erzeugungseinrichtung. Mit der Kontrolleinheit sind beispielsweise die Druckluftkompression, die Drucklufterzeugung und die damit bereitstellbare Luftleistung vorgebbar und/oder variierbar. Die bereitstellbare Luftleistung ist mit der Kontrolleinheit insbesondere auf einen realen **z. B.** jeweils momentan erforderlichen Luft-Bedarf anpassbar, zum Beispiel dynamisch anpassbar. Die reale Luft-Leistung ist insbesondere programmierbar und/oder auf Basis der von Sensormitteln der Zuführvorrichtung erfassten Sensorwerte an den realen Bedarf zum Beispiel dynamisch anpassbar. Erfasste Sensorwerte betreffen zum Beispiel eine Geschwindigkeit der geförderten Elemente in dem Leitungsabschnitt und/oder der Transportleitung. Mit der Kontrolleinheit ist auf Basis der sensorisch erfassten Geschwindigkeit der geförderten Elemente in dem Leitungsabschnitt und/oder der Transportleitung eine Anpassung der Geschwindigkeit der geförderten Elemente auf einen zum Beispiel in einer Software hinterlegten Ziel- bzw. Sollwert der Geschwindigkeit der transportierten Elemente möglich.

Gemäß einer beispielhaften Abwandlung der Zuführvorrichtung sind Sensormittel zur Erfassung und Bereitstellung von Sensorwerten und zur Anpassung eines Gasstrom-Bedarfs zur Bereitstellung der Gas-Strömung vorhanden. Mit den Sensormitteln lassen sich Sensorwerte bezüglich zum Beispiel von Kenndaten bezüglich der Elemente und/oder der Gas-Strömung erfassen. Mit den Sensormitteln lassen sich Sensorwerte kontinuierlich oder diskontinuierlich erfassen und bereitstellen. Mit den Sensormitteln lassen sich Sensorwerte zum Beispiel für die Weiterverarbeitung durch die Kontrolleinheit bereitstellen. Zum Beispiel dienen die Sensormittel bzw. die bereitgestellten Sensorwerte zur insbesondere dynamischen Anpassung des Gasstrom-Bedarfs. Mit den Sensormitteln lassen sich zum Beispiel Daten bereitstellen, welche eine Geschwindigkeit der Elemente beim Transport durch den Leitungsabschnitt und/oder der Transportleitung abbilden. Die Sensormittel sind zum Beispiel Positionssensoren bzw. Positions-Erfassungssensoren, beispielsweise mit einem definierten Abstand zum Messobjekt. Es sind auch andere Sensoren möglich, welche Sensordaten zum Beispiel im Hinblick auf die Gas-Strömung und/oder die bewegten Elemente in dem Leitungsabschnitt und/oder der Transportleitung erfassen und weitergeben.

Mit den von den Sensormitteln der Kontrolleinheit bereitstellbaren Daten, ist zum Beispiel eine Kontrolle und/oder Anpassung der Geschwindigkeit der Elemente auf zum Beispiel einen Zielwert der Geschwindigkeit der Elemente bei der Bewegung durch den Leitungsabschnitt und/oder die Transportleitung möglich.

Die Sensormittel umfassen zum Beispiel Sensormittel **z. B.** zur Gas-Druck-Erfassung und/oder **z. B.** zur Gas-Volumenstrom-Erfassung der von der Gasstrom-Erzeugungseinrichtung erzeugten Gas-Strömung.

Es ist überdies von Vorteil, wenn die Zuführvorrichtung als eine separate Peripherie-Einheit mit einem Gehäuse und einem vom Gehäuse umgebenen Innenraum der Zuführvorrichtung ausgebildet ist. Damit ist die Zuführvorrichtung flexibel für unterschiedliche Anwendungen einsetzbar. Die Peripherie-Einheit ist beispielsweise als mobile Einheit derart ausgebildet, dass eine Person die Zuführvorrichtung **z. B.** manuell in einem Aufstellungsraum bewegen kann insbesondere an einen gewünschten Aufstellungsort innerhalb des Aufstellungsraums.

Die Peripherie-Einheit weist **z. B.** Fahrmittel zur fahrbaren Bewegung der Peripherie-Einheit bzw. der Zuführvorrichtung auf, **z. B.** Rollen oder Räder.

Die Zuführvorrichtung weist beispielsweise zumindest eine weitere Komponente auf, **z. B.** einen Sortiertopf benachbart zum Vorratsbehälter und/oder neben dem Leitungsabschnitt, eine Pufferstrecke, und/oder eine Vereinzelungseinrichtung. Die Vereinzelungseinrichtung dient zum Beispiel zum Vereinzeln der Elemente zum Beispiel aus einer vorgelegten Reihe von Elementen, beispielsweise eines ersten bzw. vordersten Elements aus der Reihe vor dem Eintritt in den Leitungsabschnitt.

Die Zuführvorrichtung ist beispielsweise derart abstimmbar ausgebildet, um Elemente vorzulegen und von der Zuführvorrichtung zum Verarbeitungsgerät zuzuführen, wobei die Elemente Fügeelemente wie Schrauben, Nieten, Stanznieten, Funktionselemente wie Stanzelemente, Einstanz-, Einpress-, Clinchniet-Elemente, Einpressbolzen und/oder Einpressmuttern sind. Damit ist die Zuführvorrichtung vielseitig und flexibel für unterschiedliche Setzaufgaben verwendbar. Mit der Zuführvorrichtung lassen sich Werkzeuge wie Press- oder Stanz- oder Clinch-Werkzeuge bedienen und entsprechende passende Elemente dem Werkzeug zuführen.

Die Elemente sind zum Beispiel einteilige bzw. einstückige Elemente.

Beispielsweise sind der Leitungsabschnitt und die Transportleitung passend abgestimmt auf die darin mit der Gas-Strömung transportierbaren Elemente, zum Beispiel auf die Form und/oder die Größe der Elemente.

Weiter weist die Zuführvorrichtung zum Beispiel ein Filterorgan zur Filterung des Gases auf, welches zur Bereitstellung der Gas-Strömung dient. Das Filterorgan ist z. B. ein Gasfilterorgan wie ein Luft-Fein- und/oder ein Luft-Grobfilter. Insbesondere ist das Filterorgan saugseitig der Gasstrom-Erzeugungseinrichtung vorgesehen. Damit wird das Gas bzw. die von der Gasstrom-Erzeugungseinrichtung angesaugte Luft von z. B. Partikeln befreit. Mit dem Filterorgan lassen sich feine Partikel wie z. B. Staubpartikel aus dem angesaugten Gas bzw. aus der angesaugten Luft zumindest nahezu vollständig bis zum Beispiel 90 % entfernen. Damit erfolgt eine Filtrierung wie eine Reinigung des zum Beispiel gesamten angesaugten und verdichteten und/oder beschleunigten Luftvolumens vor Eintritt in die Gasstrom-Erzeugungseinrichtung.

Die vorliegende Offenbarung betrifft zudem ein Zuführsystem mit einer hohlen Transportleitung und einer Zuführvorrichtung, wobei eine Zuführvorrichtung nach einer der wie oben beschriebenen Ausbildungen vorgesehen ist. Das System umfasst demnach eine wie oben beschriebene Zuführvorrichtung und zusätzlich die Transportleitung. Damit lassen sich unterschiedliche Verarbeitungsgeräte bedienen. Die Transportleitung umfasst zum Beispiel einen flexiblen hohlen Zuführschlauch oder eine starre hohle Leitung.

Eine Zuführung der Elemente von der Zuführvorrichtung zu einem Verarbeitungsgerät in der Transportleitung erfolgt zum Beispiel jeweils in einer diskreten Element-Einheit beim Transport der Elemente: z. B. einzeln, oder als Einheit von genau zwei oder genau drei oder mehr benachbarten zum Beispiel sich berührenden Elementen in einer Reihe aus Elementen.

Der Transport erfolgt über den Leitungsabschnitt und über die hohle Transportleitung, wobei die Transportleitung zum geführten Transport der Elemente dient und einen Bereich zwischen der Zuführvorrichtung und dem Verarbeitungsgerät überbrückt.

Schließlich erstreckt sich die Erfindung auf ein System mit einem Verarbeitungsgerät zur Verarbeitung von Elemente mit einem Zuführsystem wie oben beschrieben. Das System ist zum Beispiel ein Technologiesystem mit einer dezentralen Druckluftbereitstellung und/oder einer dezentralen Druckluftversorgung. Die Gasstrom-Erzeugungseinrichtung z. B. eine Druckluftversorgung zur Bereitstellung und zum Transport der Elemente ist z. B. in der Zuführvorrichtung integriert.

Das Verarbeitungsgerät ist für eine Verarbeitung der von der Zuführvorrichtung zugeführten Elemente ausgebildet. Das Verarbeitungsgerät ist **z. B.** ein Werkzeug zum Setzen der Elemente an einem Werkstück **z. B.** um diese an einem Werkstück anzubringen. Das System weist zum Beispiel zusätzlich einen Roboter auf. Das Verarbeitungsgerät ist beispielsweise mit einem Roboter verbunden bzw. an einem bewegbaren Roboterarm des Roboters aufgenommen. Der Roboter dient insbesondere zur Bedienung und räumlichen Bewegung des Verarbeitungsgeräts, um zum Beispiel die Elemente mit dem Verarbeitungsgerät an einem Werkstück anzubringen.

Das beispielsweise als Niet-Verarbeitungsgerät ausgebildete Verarbeitungsgerät weist beispielsweise einen hydropneumatischen bzw. einen pneumohydraulischen Antrieb und **z. B.** einen C-Bügel mit zwei Schenkeln auf. An einem Schenkel des C-Bügels ist zum Beispiel eine Stempeleinheit und an dem anderen Schenkel **z. B.** eine Matrizeneinheit des Verarbeitungsgeräts aufgenommen.

Alternativ kann **z. B.** eine Roboterzange eine Elemente-Magazinierung aufweisen. Mit mehreren Verarbeitungsgeräten ist zum Beispiel ein Technologiesystem mit zum Beispiel genau zwei oder mehr als zwei Verarbeitungsgeräten bzw. Zuführvorrichtungen bereitstellbar.

Zum Beispiel ist an dem Verarbeitungsgerät eine Gasstrom-Erzeugungseinrichtung vorgesehen, mit der Luft aus der Umgebung des Verarbeitungsgeräts (3) ansaugbar ist, um eine Gas-Strömung bereitzustellen, wobei auf einer Auslassseite der Gasstrom-Erzeugungseinrichtung eine Gas-Strömung auf einem Niederdruck-Niveau mit einem Absolut-Gasdruck zwischen 1,03 bar und 1,50 bar bereitzustellen.

Alternativ wird ein Verarbeitungsgerät für Elemente vorgeschlagen, wobei eine Gasstrom-Erzeugungseinrichtung vorgesehen ist, mit der Luft aus der Umgebung des Verarbeitungsgeräts ansaugbar ist, um eine Gas-Strömung zum Transport von Elementen bereitzustellen, wobei auf einer Auslassseite der Gasstrom-Erzeugungseinrichtung eine Gas-Strömung auf einem Niederdruck-Niveau mit einem Absolut-Gasdruck zwischen 1,03 bar und 1,50 bar bereitzustellen. Zum Beispiel weist das Verarbeitungsgerät einen Vorratsbehälter für eine Mehrzahl von Elementen auf. Mit der Gasstrom-Erzeugungseinrichtung lassen sich vereinzelte Elemente aus dem Vorratsbehälter am Verarbeitungsgerät einzeln an eine Übergabestelle des Verarbeitungsgeräts transportieren. An der Übergabestelle des Verarbeitungsgeräts wird ein Element von z. B**.** einem bewegbaren Stempel des Verarbeitungsgeräts weiterbewegt und verarbeitet zum Beispiel an einem Werkstück eingepresst.

Das Verarbeitungsgerät mit einer Gasstrom-Erzeugungseinrichtung ist auch alternativ zu einem Verarbeitungsgeräts ohne Gasstrom-Erzeugungseinrichtung in dem oben beschriebenen System verwendbar.

### Figurenbeschreibung

Weitere Merkmale und Vorteile sind anhand der in den Figuren schematisiert dargestellten Ausführungsbeispiele näher erläutert.

Im Einzelnen zeigt:
Fig. 1 ein schematisch dargestelltes System zur Anbringung von Elementen an Werkstücken, umfassend eine Zuführvorrichtung, ein Verarbeitungsgerät und eine Transportleitung,
Fig. 2 die Anordnung gemäß Fig. 1 ohne Werkstücke und ohne Roboter,
Fig. 3 einen oberen Ausschnitt der Zuführvorrichtung aus Fig. 1 und 2 in Vorderansicht ohne eine vorderseitige Vorrichtungstüre,
Fig. 4 eine alternative Zuführvorrichtung perspektivisch ohne ein vorderseitiges Gehäuseteil,
Fig. 5 schematisiert ein alternatives System mit Zuführvorrichtung, Transportleitung und Verarbeitungsgerät mit angedeutetem Werkstück,
Fig. 6 schematisiert ein zu Fig. 5 alternatives System und
Fig. 7 ein Verarbeitungsgerät mit einer Gasstrom-Erzeugungseinrichtung.

Für sich entsprechende Elemente unterschiedlicher Ausführungsbeispiele sind teils die gleichen Bezugszeichen verwendet.

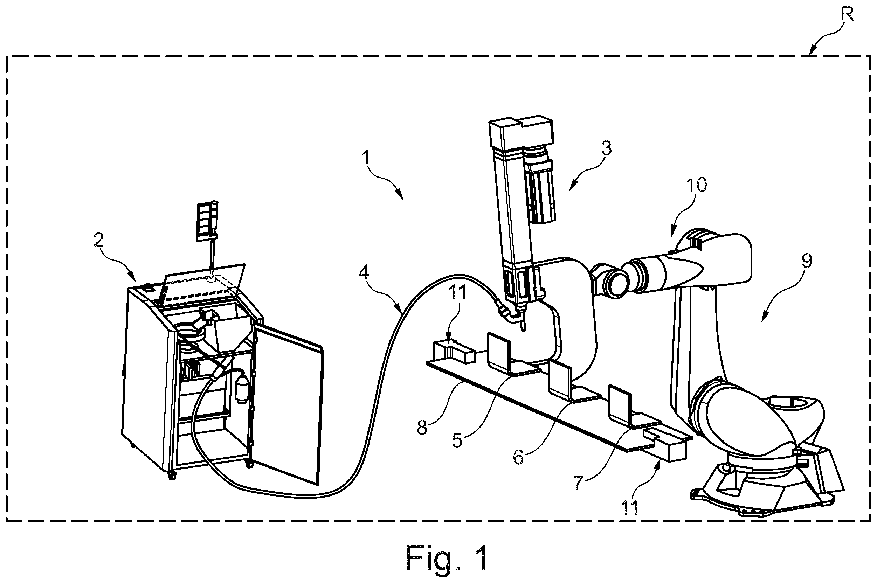

Fig. 1 zeigt ein System 1 zur Verarbeitung von Elementen (nicht dargestellt in den Fig. 1-3) in perspektivischer Ansicht. Das System 1 umfasst eine Zuführvorrichtung 2, ein Verarbeitungsgerät 3 und eine hohle Transportleitung 4. Die Transportleitung 4 ist zum Beispiel als hohler flexibler Zuführschlauch ausgestaltet. Die Transportleitung 4 ist mit einem Ende 4b am Verarbeitungsgerät 3 über einen Leitungsanschluss 3a des Verarbeitungsgeräts 3 mit diesem verbunden bzw. daran angeschlossen.

Das System 1 dient zum Einwirken auf bzw. zur Bearbeitung von an einer Bearbeitungsstation 11 fest vorhandenen Werkstücken 5, 6, 7 und 8. Das Einwirken auf die Werkstücke 5-8 zum Anbringen eines Elements an einer Fügestelle erfolgt mit dem Verarbeitungsgerät 3 zur Verarbeitung der Elemente bzw. zum Beispiel zum Setzen eines Elements an der Fügestelle an dem jeweiligen Werkstück 5-8. Beispielsweise werden die winkelförmigen Werkstücke 5-7 jeweils vernietet mit dem als ebene Blechlage ausgebildeten Werkstück 8. Die Werkstücke 5-7 sind auf einer Oberseite des Werkstücks 8 regelmäßig beabstandet zueinander positioniert. Das Verarbeitungsgerät 3 ist gemäß Fig. 1 im Bereich des Werkstücks 5 vorhanden.

Das Verarbeitungsgerät 3 ist mit einem Roboter 9 verbunden bzw. an einem bewegbaren Roboterarm 10 des Roboters 9 aufgenommen. Der Roboter 9 dient zur Bedienung und räumlichen Bewegung des Verarbeitungsgeräts 3, um zum Beispiel die Elemente an den Werkstücken 5-8 anzubringen.

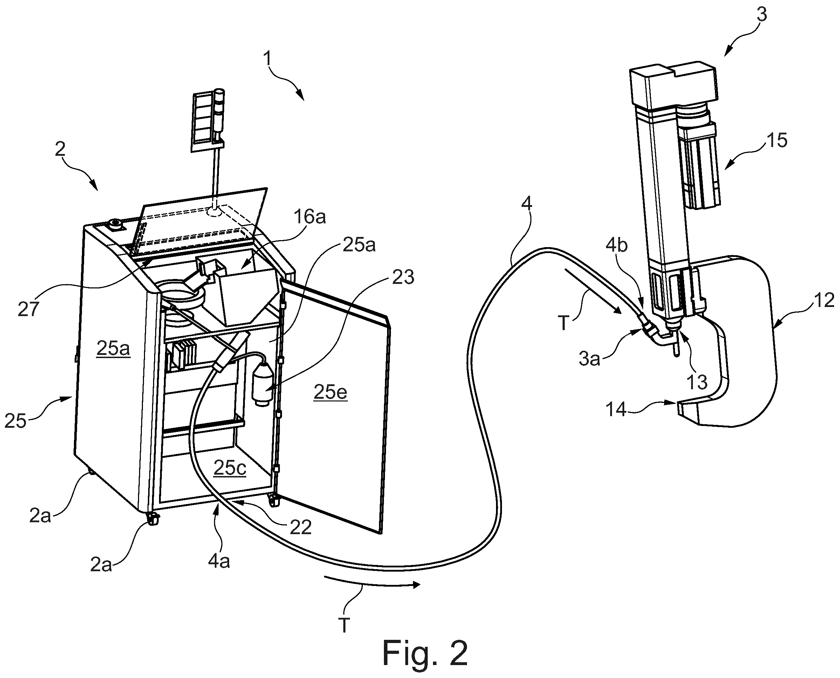

Das beispielsweise als Niet-Verarbeitungsgerät ausgebildete Verarbeitungsgerät 3 weist beispielsweise einen hydropneumatischen bzw. einen pneumohydraulischen Antrieb 15 und einen C-Bügel 12 mit zwei Schenkeln auf. An einem Schenkel des C-Bügels 12 ist eine Stempeleinheit 13 und an dem anderen Schenkel eine Matrizeneinheit 14 des Verarbeitungsgeräts 3 aufgenommen (s. Fig. 2).

Das System 1 samt dem Roboter 9 und der Bearbeitungsstation 11 mit den Werkstücken 5-8 sind in einem Aufstellungsraum R positioniert. Der Aufstellungsraum R, der zum Beispiel einen Teil einer Produktionshalle einnimmt, ist in Fig. 1 schematisiert gestrichelt umrandet angedeutet.

Fig. 2 zeigt ohne die Werkstücke 5-8 das System 1 ohne Roboter.

Die Zuführvorrichtung 2 und das Verarbeitungsgerät 3 sind über die hohle Transportleitung 4 miteinander verbunden. Die Elemente werden durch eine Gas-Strömung innerhalb der insbesondere gasdichten Transportleitung 4 in Transportrichtung T von der Zuführvorrichtung 2 zum Verarbeitungsgerät 3 transportiert. Die am Verarbeitungsgerät 3 ankommenden Elemente werden in entsprechenden Leitungsabschnitten des Verarbeitungsgeräts 3 weitergeleitet und über die Stempeleinheit 13 an der jeweiligen Fügestelle der Werkstücke 5-8 gesetzt. Mit dem Verarbeitungsgerät 3 werden zum Beispiel Niete wie Stanzniete, Clinchniete oder Funktionselemente an den Werkstücken 5-8 gesetzt.

Die Zuführvorrichtung 2 ist als zum Verarbeitungsgerät 3 separates Peripherie-Einheit ausgestaltet, zum Beispiel mit unterseitigen Rollen 2a zur fahrbaren Bewegung des Verarbeitungsgeräts 3 auf einem festen Untergrund.

Die Zuführvorrichtung 2 weist einen Vorratsbehälter 16 mit einem Aufnahmevolumen 16a zur Vorlage bzw. zur Aufnahme einer Mehrzahl von Elementen (nicht dargestellt) auf. Der Vorratsbehälter 16 ist über ein hohles leitungsartiges Zwischenstück 17 zum einzelnen Durchlass der Elemente mit einem Sortiertopf 18 verbunden. Im Sortiertopf 18 werden die vom Zwischenstück 17 ankommenden Elemente einzeln lagerichtig positioniert und in eine an den Sortiertopf 18 anschließende Pufferleitung 19 überführt. In der Pufferleitung 19 sind die Elemente in der jeweils gleichen Orientierung in einer Reihe hintereinander vorgelegt. Aus der Pufferleitung 19 gelangen die Elemente weiter nach unten zu einer Vereinzelungseinrichtung 20 für die Elemente.

Von der Vereinzelungseinrichtung 20 gelangen die Elemente einzeln in einen hohlen Leitungsabschnitt 21 der Zuführvorrichtung 2. Durch den Leitungsabschnitt 21 gelangen die Elemente zu einer Anschluss-Stelle 22 der Zuführvorrichtung 2.

An der Anschluss-Stelle 22 sind die Elemente aus der Zuführvorrichtung 2 ausschleusbar. An der Anschluss-Stelle 22 ist der Leitungsabschnitt 21 z. B**.** gasdicht verbunden mit einem Ende 4a der Transportleitung 4. Im gezeigten Ausführungsbeispiel sind der Leitungsabschnitt 21 und die Transportleitung 4 einstückig miteinander ausgebildet bzw. einstückig miteinander verbunden. Die Leitungsabschnitt 21 und die Transportleitung 4 sind beispielhaft durch ein zusammenhängendes Stück als Zuführschlauch gebildet.

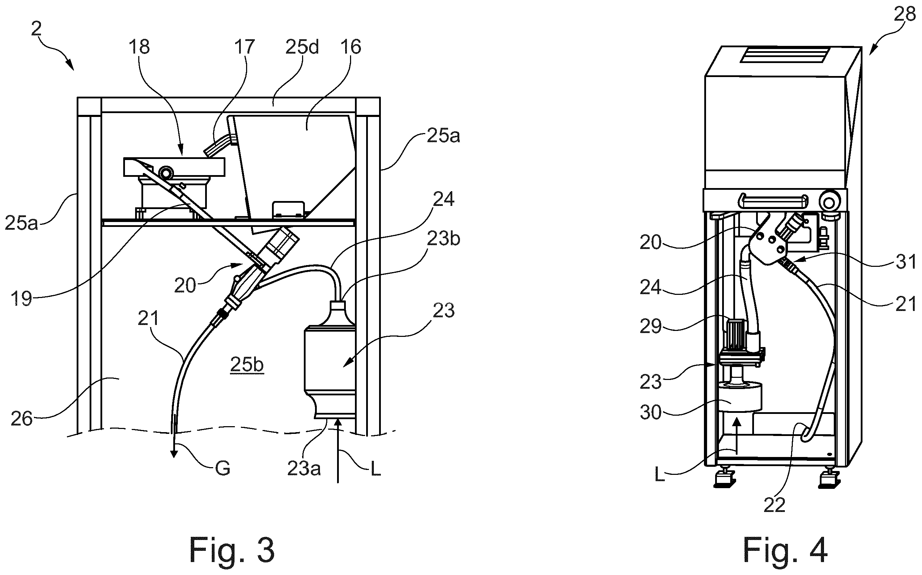

Die Elemente sind mit Hilfe bzw. mittels einer Gas-Strömung G im Leitungsabschnitt 21 und in der Transportleitung 4 von der Anschluss-Stelle 22 bis zum von der Zuführvorrichtung 2 beabstandeten Verarbeitungsgerät 3 transportierbar. Die Elemente werden beispielsweise einzeln im Bereich der Vereinzelungseinrichtung 20 von der im Leitungsabschnitt 21 (s. Fig. 3) herrschenden Gas-Strömung G mitgenommen und in Richtung der Anschluss-Stelle 22 transportiert. Die Gas-Strömung setzt sich in der Transportleitung 4 fort, so dass die Elemente vom Leitungsabschnitt 21 in die Transportleitung 4 bewegt werden. Aufgrund der Gas-Strömung G in der Transportleitung erfolgt der reibungsarme Transport der Elemente in der Transportleitung 4 bis zu einem Ende 4b der Transportleitung 4. Das Ende 4b der Transportleitung 4 reicht bis zum Leitungsanschluss 3a am Verarbeitungsgerät 3 zum Beispiel im Bereich der Stempeleinheit 13. Das Ende 4b der Transportleitung 4 ist mit dem Leitungsanschluss 3a an der Stempeleinheit 13 verbunden, durch welche die Elemente einzeln und positionsrichtig in einen Stempelkanal der Stempeleinheit 13 gelangen, zum Beispiel mit Hilfe der Gas-Strömung G eingeblasen werden.

Die Zuführvorrichtung 2 weist zur Bereitstellung der Gas-Strömung G in dem Leitungsabschnitt 21 und weiter in der Transportleitung 4 eine Gasstrom-Erzeugungseinrichtung 23 auf. Beispielsweise ist die Gasstrom-Erzeugungseinrichtung 23 ein Axial-Gebläse. Die Gasstrom-Erzeugungseinrichtung 23 ist zum Beispiel ausschließlich für die Zuführvorrichtung 2 vorgesehen, zur Förderung der Elemente mittels der Gas-Strömung G. Über eine zur Umgebung bzw. Atmosphäre offene Saugseite 23a der Gasstrom-Erzeugungseinrichtung 23 wird atmosphärische Luft L aus der Umgebung angesaugt und in der Gasstrom-Erzeugungseinrichtung 23 verdichtet und/oder beschleunigt. Die Gasstrom-Erzeugungseinrichtung 23 ist **z. B.** elektrisch betreibbar mit einem integrierten Antriebs- bzw. Elektro-Motor. Eine Druckseite 23b der Gasstrom-Erzeugungseinrichtung 23 ist zum Beispiel über eine druckluftführende Verbindungsleitung 24 mit der Vereinzelungseinrichtung 20 verbunden. Dabei gelangt die Druckluft-Gas-Strömung in den Bereich des Leitungsabschnitts 21, der an die Vereinzelungseinrichtung 20 angeschlossen ist. Die Gas-Strömung bewirkt eine Ansaug- bzw. Mitnahmekraft auf ein vereinzeltes Element an einer Abführseite der Vereinzelungseinrichtung 20. Die ankommende Druckluft strömt dabei in den Leitungsabschnitt 21 über und nimmt z. B. ein einzelnes in der Vereinzelungseinrichtung 20 vorderstes bzw. vereinzeltes Element mit und weiter in den Leitungsabschnitt 21. Die Vereinzelungseinrichtung 20 vereinzelt das zur Vereinzelungseinrichtung 20 hin betrachtet vorderste Element aus einer Reihe von Elementen, die in der Pufferleitung 19 an der Vereinzelungseinrichtung 20 ansteht.

Mit der Gas-Strömung sind bei aktiver Gasstrom-Erzeugungseinrichtung 23 die von der Vereinzelungseinrichtung nacheinander vereinzelten Elemente durch den Leitungsabschnitt 21 an die Anschluss-Stelle 22 bewegbar.

Im verbundenen Zustand von Leitungsabschnitt 21 und Transportleitung 4 sind die Elemente von der Anschluss-Stelle 22 mit der Gas-Strömung aus dem Leitungsabschnitt 21 heraus und weiter transportierbar in der Transportleitung 4 bis zum Verarbeitungsgerät 3.

Die Gasverdichter-Einheit 23 ist ausgebildet, Luft L aus der Umgebung der Zuführvorrichtung 2 auf der Saugseite 23a der Gasverdichter-Einheit 23 anzusaugen, um die Gas-Strömung bereitzustellen.

Die Gasstrom-Erzeugungseinrichtung 23 ist ausgebildet, Luft mit atmosphärischem Druck aus der Umgebung der Zuführvorrichtung 2, also Anteile der Luft im Aufstellungsraum R der Zuführvorrichtung 2, auf der Saugseite 23a der Gasverdichter-Einheit 23 anzusaugen, um die Gas-Strömung bereitzustellen. Die Saugseite 23a ist zum Beispiel innerhalb eines Gehäuses 25 der Zuführvorrichtung 2 bzw. in einem vom Gehäuse 25 umgebenen Innenraum 26 der Zuführvorrichtung 2 vorhanden, wobei der Innenraum 26 offen ist zur Umgebung bzw. mit dem Luftraum im Aufstellungsraum R verbunden ist. Die Saugseite 23a ist alternativ oder zusätzlich zum Beispiel außerhalb des Gehäuses 25 der Zuführvorrichtung 2 offen zum Luftraum im Aufstellungsraum R. Die Gasstrom-Erzeugungseinrichtung 23 weist zum Beispiel einen Luftstromerzeuger auf.

Das kastenartige Gehäuse 25 weist Seitenwände 25a, eine Rückwand 25b, einen Boden 25c, eine Oberseite 25d und eine schwenkbare Türe 25e auf. Die Oberseite 25d ist mittels einer geöffneten schwenkbaren Klappe offen zur Umgebung, was Fig. 1 und 2 zeigen, so dass im Betrieb der Gasstrom-Erzeugungseinrichtung 23 immer ausreichend Umgebungsluft zur Saugseite 23a der Gasstrom-Erzeugungseinrichtung 23 gelangt. Eine **z. B.** Elektroverkabelung zur Versorgung der Zuführvorrichtung 2 mit elektrischer Energie ist nicht dargestellt. Die Zuführvorrichtung 2 weist zum Beispiel keine Versorgungsschnittstelle für eine dezentrale Druckluftversorgung der Zuführvorrichtung 2 auf. Die Zuführvorrichtung 2 weist dementsprechend z.B**.** keinen Druckluftanschluss- bzw. keinen Drucklufteingang für eine Zuführung von zum System 1 extern bzw. zentral bereitgestellter Druckluft auf.

Die Gasstrom-Erzeugungseinrichtung 23 umfasst zum Beispiel eine Gaskompressionseinheit zur saugseitig in dem Leitungsabschnitt 21 erzeugten Gas-Strömung. Die Gas-Strömung ist durch verdichtete und/oder beschleunigte Luft mit der Gasstrom-Erzeugungseinrichtung 23 bereitstellbar, was auf unterschiedliche Weise möglich ist. Die Gasstrom-Erzeugungseinrichtung 23 weist beispielsweise eine Druckluftkompressionseinheit aufweisen. Die Gasstrom-Erzeugungseinrichtung 23 arbeitet zum Beispiel nach dem Turboverdichterprinzip mit Radialverdichter und/oder Axialverdichter, zum Beispiel mit einem mehrstufigen Radialverdichter und/oder mit einem mehrstufigen Axialverdichter.

Eine nicht näher dargestellte übergeordnete Kontrolleinheit 27 der Zuführvorrichtung 2 weist eine Rechnersteuerung bzw. Software und eine Rechner- und Speichereinheit auf und dient zur Kontrolle des Betriebs der Zuführvorrichtung **2.** Die Kontrolleinheit 27 dient insbesondere zur Kontrolle einer vorgebbaren bzw. anpassbaren und/oder einstellbaren Leistungsstufe der Gasstrom-Erzeugungseinrichtung 23. Mit der Kontrolleinheit 27 sind beispielsweise die Druckluftkompression, die Drucklufterzeugung und die damit bereitstellbare Luftleistung vorgebbar und/oder variierbar. Die bereitstellbare Luftleistung ist mit der Kontrolleinheit 27 insbesondere auf einen realen **z. B.** jeweils momentan erforderlichen Luft-Bedarf anpassbar, zum Beispiel dynamisch anpassbar. Der reale Luft-Bedarf ist insbesondere programmierbar und/oder **z. B.** auf Basis der mit Sensormitteln (nicht gezeigt) erfassten Sensorwerte an den realen Bedarf zum Beispiel dynamisch anpassbar. Erfasste Sensorwerte betreffen zum Beispiel eine Geschwindigkeit der geförderten Elemente in dem Leitungsabschnitt 21 und/oder der Transportleitung 4. Mit der Kontrolleinheit 27 ist zum Beispiel auf Basis der sensorisch erfassten Geschwindigkeit der geförderten Elemente in dem Leitungsabschnitt 21 und/oder der Transportleitung 4 eine Anpassung der Geschwindigkeit der geförderten Elemente auf einen in einer Software hinterlegten Ziel- bzw. Sollwert möglich.

Die Sensormittel der Zuführvorrichtung 2 sind zur Erfassung und Bereitstellung der Sensorwerte zum Beispiel zur Bereitstellung von Sensorwerten für die Weiterverarbeitung durch die Kontrolleinheit 27 vorgesehen.

Eine nicht dargestellte Alternative des Systems 1 zeichnet sich dadurch aus, dass eine Zuführvorrichtung mit den Komponenten gemäß der Zuführvorrichtung 2 zum Beispiel jedoch ohne ein Gehäuse 25 an dem Verarbeitungsgerät 3 zum Beispiel unmittelbar vorhanden ist. Eine Zuführvorrichtung mit den Funktionen bzw. mit den Komponenten gemäß der Zuführvorrichtung 2 ist alternativ beispielsweise an dem Roboter 9 vorhanden. Am Roboter 9 sind zum Beispiel eine Magazinierung der Elemente mit dem Vorratsbehälter und/oder zusätzlich ein Sortiertopf und/oder eine Pufferleitung vorhanden. Für ein als Technologiesystem ausgebildetes System sind z. B. genau eine Zuführvorrichtung, oder genau zwei oder mehr als zwei Zuführvorrichtungen vorgesehen. Beispielsweise ist es auch möglich, dass bei einem alternativen System zumindest eine Komponente gemäß der Zuführvorrichtung 2 an dem Verarbeitungsgerät 3 und zumindest eine andere Komponente gemäß der Zuführvorrichtung 2 an dem Roboter 9 vorhanden ist.

Bei einem alternativen System bzw. Technologie-System ist es zum Beispiel eingerichtet, dass die Förderung der Elemente am Verarbeitungsgerät 3 und/oder am Roboter 9 vorgesehen ist, um die Elemente von einem Fördergerät zu einer Befüllstation des Verarbeitungsgeräts zu fördern.

Bei einem alternativen System bzw. Technologie-System ist es zum Beispiel eingerichtet, die Elemente von einem auf dem Verarbeitungsgerät vorgesehenen Magazin zur Vorlage einer Vielzahl von Elementen zu einer Verarbeitungsstelle des Verarbeitungsgeräts zu fördern. Die Verarbeitungsstelle des Verarbeitungsgeräts umfasst zum Beispiel einen Setzkopf des Verarbeitungsgeräts umfassend die Stempeleinheit und die Matrizeneinheit.

Bei einem mehrbahnigen Gesamt-System mit z. B. parallel arbeitenden Systemen gemäß dem System 1 ist es beispielsweise einrichtbar, dass die jeweilige Bahn gemäß dem oben beschriebenen System 1 konzipiert ist.

Eine weitere Alternative eines Systems zeichnet sich dadurch aus, dass ein normaler bzw. zum Beispiel handelsüblicher bekannter Kompressor in der Zuführvorrichtung 2 und/oder am Verarbeitungsgerät 3 und/oder am Roboter 9 vorhanden ist. Der Kompressor arbeitet zum Beispiel nach dem Verdrängerprinzip und ist beispielsweise als Kolben- oder Schraubenverdichter realisiert.

Fig. 4 zeigt eine zur Zuführvorrichtung 2 alternative Zuführvorrichtung 28 ohne ein vorderseitiges Gehäuseteil. Die Zuführvorrichtung 28 unterscheidet sich von der Zuführvorrichtung 2 durch die Gasstrom-Erzeugungseinrichtung 23. Die Gasstrom-Erzeugungseinrichtung 23 gemäß Fig. 4 ist als ein mehrstufiges Radialgebläse 29 ausgebildet. Saugseitig zur Gas-Erzeugungseinrichtung 23 wird Luft L aus der Umgebung angesaugt, wobei dem Radialgebläse 29 ein Filterorgan 30 vorgeschaltet ist. Von einer Element-Übergabestelle 31 einer Vereinzelungseinrichtung 20 werden vereinzelte Elemente in dem Leitungsabschnitt 21 zur Anschluss-Stelle 22 mit einem Niederdruck-Gasstrom bzw. Luftstrom zwischen 1,03 und 1,5 bar gefördert.

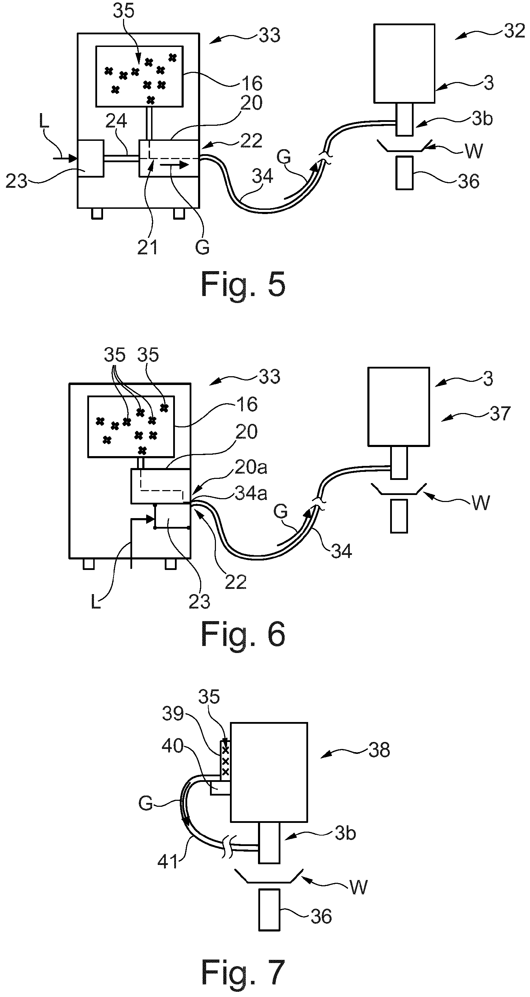

Fig. 5 zeigt stark schematisch ein System 32 mit einer Zuführvorrichtung 33 samt Gasstrom-Erzeugungseinrichtung 23, einer hohlen Transportleitung 34, durch welche Elemente 35 einzeln zu einem Verarbeitungsgerät 3 des Systems 32 mit einer Niederdruck-Gas-Strömung transportierbar sind. Ein an das Verarbeitungsgerät 3 herantransportiertes Element 35 wird vom Verarbeitungsgerät 3 an einem Werkstück W angebracht zum Beispiel mit Hilfe eines bewegbaren kraftangetriebenen Stempels des Verarbeitungsgeräts 3 in das Werkstück W eingepresst. Das Werkstück W stützt sich zum Beispiel an einer Matrize 36 des Verarbeitungsgeräts 3 ab. Eine Mehrzahl von Elementen 35 ist in einem Vorratsbehälter 16 der Zuführvorrichtung 33 vorgelegt bzw. gespeichert.

Die Gasstrom-Erzeugungseinrichtung 23 ist ein einstufiges oder ein mehrstufiges Axial- oder Radialgebläse oder ein Ventilator. Es wird druckseitig der Gasstrom-Erzeugungseinrichtung 23 ein Luft-Strom bzw. eine Gas-Strömung G mit einem gleichbleibendem absoluten Gasdruck zwischen 1,03 und 1,50 erzeugt.

Von der von der Gasstrom-Erzeugungseinrichtung 23 bereitgestellten Gas-Strömung G werden die in der Vereinzelungseinrichtung 20 vereinzelten Elemente 35 innerhalb der hohlen Transportleitung 34 zu einem Setzkopf 3b mit einer Stempeleinheit des Verarbeitungsgeräts 3 gefördert. Der Gasstrom G strömt innerhalb der Transportleitung 34 und ist in Fig. 5 wie auch in Fig. 6 lediglich zur besseren Darstellung außerhalb der Transportleitung 34 als Strömungspfeil dargestellt.

Fig. 6 zeigt ein alternatives System 37 mit einer Zuführvorrichtung 33 samt Gasstrom-Erzeugungseinrichtung 23, einer hohlen Transportleitung 34, durch welche Elemente 35 einzeln zu einem Verarbeitungsgerät 3 des Systems 37 mit einer von der Gasstrom-Erzeugungseinrichtung 23 bereitgestellten Niederdruck-Gas-Strömung transportierbar sind.

Ein vereinzeltes Element 35 wird mittels der Vereinzelungseinrichtung 20 in die Transportleitung 34 überführt. In der hohlen Transportleitung 34 herrscht eine Gas-Strömung G in Richtung zum Verarbeitungsgerät 3, wodurch die Elemente 35 in der Transportleitung 34 zum Verarbeitungsgerät 3 gelangen. Beispielsweise wird ein Ende 34a der Transportleitung 34 zwischen einer Stelle 20aan der Vereinzelungseinrichtung 20, zur Aufnahme eines einzelnen Elements 35 in die Transportleitung 34, und der Anschluss-Stelle 22 hin- und herbewegt. Die Anschluss-Stelle 22 fällt **z. B.** mit deinem druckseitigen Auslass der Gasstrom-Erzeugungseinrichtung 23 zusammen. Auf diese Weise oder auf andere Weise ist jeweils ein einzelnes Element 35 in die Transportleitung 34 bringbar und weiter zum Verarbeitungsgerät 3 transportierbar. Bei dem System 37 fehlt ein Leitungsabschnitt in der Zuführvorrichtung 33, bzw. fehlt ein Leitungsabschnitt 21 gemäß den oben beschriebenen Anordnungen.

Fig. 7 zeigt ein zu dem Verarbeitungsgerät 3 alternatives Verarbeitungsgerät 38, an den ein Werkstück W an einer Matrize 36 positioniert ist. Das Verarbeitungsgerät 38 verarbeitet Elemente 35, die in einer Mehrzahl in einem Vorratsbehälter 39, **z. B.** ein Magazin, an dem Verarbeitungsgerät 38 gespeichert sind. Das Verarbeitungsgerät 38 umfasst eine Gasstrom-Erzeugungseinrichtung 40 wie ein Gebläse oder einen Ventilator. Mit der Gasstrom-Erzeugungseinrichtung 40 ist Gas bzw. Luft aus der Umgebung des Verarbeitungsgeräts 38 ansaugbar, um eine Gas-Strömung G bereitzustellen, wobei auf einer Auslassseite der Gasstrom-Erzeugungseinrichtung 40 eine Gas-Strömung G auf einem Niederdruck-Niveau mit einem Absolut-Gasdruck zwischen 1,03 bar und 1,50 bar bereitstellbar ist. Mittels der Gas-Strömung G mit einem Gasdruck zwischen 1,03 bar und 1,5 bar in einer hohlen Transportleitung 41 sind die Elemente 35 aus dem Vorratsbehälter 39 einzeln einem Setzkopf 3b des Verarbeitungsgeräts 38 zuführbar.

### Bezugszeichenliste

- 1: System
- 2: Zuführvorrichtung
- 2a: Rolle
- 3: Verarbeitungsgerät
- 3a: Leitungsanschluss
- 3b: Setzkopf
- 4: Transportleitung
- 4a, 4b: Ende
- 5-8: Werkstück
- 9: Roboter
- 10: Roboterarm
- 11: Bearbeitungsstation
- 12: C-Bügel
- 13: Stempeleinheit
- 14: Matrizeneinheit
- 15: Antrieb
- 16: Vorratsbehälter
- 16a: Aufnahmevolumen
- 17: Zwischenstück
- 18: Sortiertopf
- 19: Pufferleitung
- 20: Vereinzelungseinrichtung
- 20a: Stelle
- 21: Leitungsabschnitt
- 22: Anschluss-Stelle
- 23: Gasstrom-Erzeugungseinrichtung
- 23a: Saugseite
- 23b: Druckseite
- 24: Verbindungsleitung
- 25: Gehäuse
- 25a: Seitenwand
- 25b: Rückwand
- 25c: Boden
- 25d: Oberseite
- 25e: Türe
- 26: Innenraum
- 27: Kontrolleinheit
- 28: Zuführvorrichtung
- 29: Radialgebläse
- 30: Filterorgan
- 31: Element-Übergabestelle
- 32: System
- 33: Zuführvorrichtung
- 34: Transportleitung
- 34a: Ende
- 35: Element
- 36: Matrize
- 37: System
- 38: Verarbeitungsgerät
- 39: Vorratsbehälter
- 40: Gasstrom-Erzeugungseinrichtung
- 41: Transportleitung

## Patentansprüche

1. Zuführvorrichtung (2, 28, 33) für Elemente (35), wobei die Elemente (35) zu einer Anschluss-Stelle (22) der Zuführvorrichtung (2, 28, 33) bewegbar sind, wobei die Zuführvorrichtung (2, 28, 33) als eine separat positionierbare Peripherie-Einheit zur Versorgung eines Verarbeitungsgeräts (3) mit Elementen (35) ausgestaltet ist, wobei die Elemente (35) über die Anschluss-Stelle (22) aus der Zuführvorrichtung (2, 28, 33) ausschleusbar sind und wobei die Anschluss-Stelle (22) für eine Verbindung mit einer an die Zuführvorrichtung (2, 28, 33) anschließbaren hohlen Transportleitung (4, 34) ausgebildet ist, so dass im verbundenen Zustand der Transportleitung (4, 34) die Elemente (35) in der hohlen Transportleitung (4, 34) von der Anschluss-Stelle (22) bis zum von der Zuführvorrichtung (2, 28, 33) beabstandeten Verarbeitungsgerät (3) transportierbar sind, wobei die Elemente (35) mittels einer Gas-Strömung transportierbar sind, wobei die Zuführvorrichtung (2, 28, 33) eine Gasstrom-Erzeugungseinrichtung (23) aufweist, welche die Gas-Strömung derart bereitstellt, dass aufgrund der Gas-Strömung die Elemente (35) von der Anschluss-Stelle (22) aufgrund der mit der Gasstrom-Erzeugungseinrichtung (23) bereitgestellten Gas-Strömung transportierbar sind, wobei die Zuführvorrichtung (2, 28, 33) in einem Aufstellungsraum vorhanden ist, wobei die Gasstrom-Erzeugungseinrichtung (23) ausgebildet ist, Luft aus der Umgebung der Zuführvorrichtung (2, 28, 33) im Aufstellungsraum der Zuführvorrichtung (2, 28, 33) anzusaugen, um die Gas-Strömung bereitzustellen, **dadurch gekennzeichnet, dass** die Gasstrom-Erzeugungseinrichtung (23) ausgebildet ist, auf einer Auslassseite der Gasstrom-Erzeugungseinrichtung (23) eine Gas-Strömung auf einem Niederdruck-Niveau mit einem Absolut-Gasdruck zwischen 1,03 bar und 1,50 bar bereitzustellen.

2. Zuführvorrichtung (2, 28, 33) nach Anspruch 1, wobei die Gasstrom-Erzeugungseinrichtung (23) ein Gebläse (29) oder einen Ventilator umfasst.

3. Zuführvorrichtung (2, 28, 33) nach einem der vorhergehenden Ansprüche, wobei die Zuführvorrichtung (2, 28, 33) einen hohlen Leitungsabschnitt (21) aufweist, durch welchen die Elemente (35) von einer Element-Übergabestelle (31), an welcher die Elemente (35) in den Leitungsabschnitt (21) einbringbar sind, zur Anschluss-Stelle (22) der Zuführvorrichtung (2, 28, 33) bewegbar sind.

4. Zuführvorrichtung (2, 28, 33) nach einem der vorhergehenden Ansprüche, wobei die im Leitungsabschnitt (21) bewegbaren Elemente im verbundenen Zustand des Leitungsabschnitt (21) mit der Transportleitung (4) aufgrund der Gas-Strömung in dem Leitungsabschnitt (21) die Elemente von der Element-Übergabestelle durch den Leitungsabschnitt (21) an die Anschluss-Stelle bewegbar sind.

5. Zuführvorrichtung (2, 28, 33) nach einem der vorhergehenden Ansprüche, wobei die Gasstrom-Erzeugungseinrichtung (23) eine Gaskompressionseinheit zur Bereitstellung der Gas-Strömung umfasst.

6. Zuführvorrichtung (2, 28, 33) nach einem der vorhergehenden Ansprüche, wobei die Gasstrom-Erzeugungseinrichtung (23) eine Gaskompressionseinheit nach dem Turboverdichter-Prinzip zur Bereitstellung der Gas-Strömung umfasst.

7. Zuführvorrichtung (2) nach einem der vorhergehenden Ansprüche, wobei die Gasstrom-Erzeugungseinrichtung (23) eine Gaskompressionseinheit zur Bereitstellung einer in dem Leitungsabschnitt (21) druckseitig erzeugten Gas-Strömung umfasst.

8. Zuführvorrichtung (2) nach einem der vorhergehenden Ansprüche, wobei die Gasstrom-Erzeugungseinrichtung (23) eine Gaskompressionseinheit zur Bereitstellung einer in dem Leitungsabschnitt (21) saugseitig erzeugten Gas-Strömung umfasst.

9. Zuführvorrichtung (2) nach einem der vorhergehenden Ansprüche, wobei die Gasstrom-Erzeugungseinrichtung (23) eine Gaskompressionseinheit mit einem Radialverdichter zur Bereitstellung der Gas-Strömung umfasst, wobei die Gaskompressionseinheit nach dem Turboverdichter-Prinzip arbeitet.

10. Zuführvorrichtung (2) nach einem der vorhergehenden Ansprüche, wobei die Gasstrom-Erzeugungseinrichtung (23) eine Gaskompressionseinheit mit einem Axialverdichter zur Bereitstellung der Gas-Strömung umfasst, wobei die Gaskompressionseinheit nach dem Turboverdichter-Prinzip arbeitet.

11. Zuführvorrichtung (2) nach einem der vorhergehenden Ansprüche, wobei die Gasstrom-Erzeugungseinrichtung (23) eine Gaskompressionseinheit mit einem mehrstufigen Verdichter umfasst, wobei die Gaskompressionseinheit nach dem Turboverdichter-Prinzip arbeitet.

12. Zuführvorrichtung (2) nach einem der vorhergehenden Ansprüche, wobei eine übergeordnete Kontrolleinheit (27) zur Kontrolle einer Leistungsstufe der Gasstrom-Erzeugungseinrichtung (23) vorhanden ist.

13. Zuführvorrichtung (2, 28, 33) nach einem der vorhergehenden Ansprüche, wobei Sensormittel zur Erfassung und Bereitstellung von Sensorwerten und zur Anpassung eines Gasstrom-Bedarfs zur Bereitstellung der Gas-Strömung vorhanden sind.

14. Zuführvorrichtung (2, 28, 33) nach einem der vorhergehenden Ansprüche, wobei die Zuführvorrichtung (2, 28, 33) als eine separate Peripherie-Einheit mit einem Gehäuse (25) und einem vom Gehäuse (25) umgebenen Innenraum (26) der Zuführvorrichtung (2, 28, 33) ausgebildet ist.

15. Zuführvorrichtung (2, 28, 33) nach einem der vorhergehenden Ansprüche, wobei die Zuführvorrichtung (2) derart abstimmbar ausgebildet ist, um Elemente (35) vorzulegen und von der Zuführvorrichtung (2, 28, 33) zum Verarbeitungsgerät (3) zuzuführen, wobei die Elemente (35) Fügeelemente wie Schrauben, Nieten, Stanznieten, Funktionselemente wie Stanzelemente, Einstanz-, Einpress-, Clinchniet-Elemente, Einpressbolzen und/oder Einpressmuttern sind.

16. Zuführvorrichtung (2, 28, 33) nach einem der vorhergehenden Ansprüche, wobei die Zuführvorrichtung (2) ein Filterorgan (30) zur Filterung des Gases aufweist, welches zur Bereitstellung der Gas-Strönung dient.

17. System (1, 32) mit einem Verarbeitungsgerät (3) zur Verarbeitung von Elemente (35) und mit einer hohlen Transportleitung (4, 34) und einer Zuführvorrichtung (2, 28, 33) nach einem der vorhergehenden Ansprüche.

18. Verarbeitungsgerät (38) für Elemente (35) umfassend eine Gasstrom-Erzeugungseinrichtung (40), mit der Luft aus der Umgebung des Verarbeitungsgeräts (38) ansaugbar ist, um eine Gas-Strömung zum Transport von Elementen (35) bereitzustellen, wobei die Gasstrom-Erzeugungseinrichtung (40) ausgebildet ist auf einer Auslassseite der Gasstrom-Erzeugungseinrichtung (38) eine Gas-Strömung auf einen Niederdruck-Niveau mit einem Absolut-Gasdruck zwischen 1,03 bar und 1,50 bar bereitzustellen.

## Claims

1. Supply device (2, 28, 33) for elements (35), wherein the elements (35) are able to be moved to a connection point (22) of the supply device (2, 28, 33), wherein the supply device (2, 28, 33) is designed as a separately positionable peripheral unit for supplying a processing apparatus (3) with elements (35), wherein the elements (35) are able to be ejected from the supply device (2, 28, 33) by way of the connection point (22), and wherein the connection point (22) is configured to connect to a hollow transport line (4, 34) that is connectable to the supply device (2, 28, 33) in such a way that in the connected state of the transport line (4, 34) the elements (35) are able to be transported in the hollow transport line (4, 34) from the connection point (22) to the processing apparatus (3) spaced apart from the supply device (2, 28, 33), wherein the elements (35) are able to be transported by means of a gas flow, wherein the supply device (2, 28, 33) has a gas flow generation installation (23) which provides the gas flow in such a manner that, by virtue of the gas flow, the elements (35) are able to be transported from the connection point (22) by virtue of the gas flow provided by the gas flow generation installation (23), wherein the supply device (2, 28, 33) is present in an installation space, wherein the gas flow generation installation (23) is configured to induct air from the environment of the supply device (2, 28, 33) in the installation space of the supply device (2, 28, 33) in order to provide the gas flow, **characterized in that** the gas flow generation installation (23) is configured to provide a gas flow at a low-pressure level with an absolute gas pressure between 1.03 bar and 1.50 bar at an outlet side of the gas flow generation installation (23).

2. Supply device (2, 28, 33) according to Claim 1, wherein the gas flow generation installation (23) comprises a fan (29) or a ventilator.

3. Supply device (2, 28, 33) according to one of the preceding claims, wherein the supply device (2, 28, 33) has a hollow line portion (21) through which the elements (35) are able to be moved from an element transfer point (31), at which the elements (35) are able to be introduced into the line portion (21), to the connection point (22) of the supply device (2, 28, 33).

4. Supply device (2, 28, 33) according to one of the preceding claims, wherein the elements which are able to be moved in the line portion (21) are able to be moved, in the connected state of the line portion (21) with the transport line (4), the elements from the element transfer point through the line portion (21) to the connection point by virtue of the gas flow in the line portion (21).

5. Supply device (2, 28, 33) according to one of the preceding claims, wherein the gas flow generation installation (23) comprises a gas compression unit for providing the gas flow.

6. Supply device (2, 28, 33) according to one of the preceding claims, wherein the gas flow generation installation (23) comprises a gas compression unit according to the turbo-compressor principle for providing the gas flow.

7. Supply device (2) according to one of the preceding claims, wherein the gas flow generation installation (23) comprises a gas compression unit for providing a gas flow generated at the pressure-side in the line portion (21).

8. Supply device (2) according to one of the preceding claims, wherein the gas flow generation installation (23) comprises a gas compression unit for providing a gas flow generated at the suction-side in the line portion (21).

9. Supply device (2) according to one of the preceding claims, wherein the gas flow generation installation (23) comprises a gas compression unit with a radial compressor for providing the gas flow, wherein the gas compression unit operates according to the turbo-compressor principle.

10. Supply device (2) according to one of the preceding claims, wherein the gas flow generation installation (23) comprises a gas compression unit with an axial compressor for providing the gas flow, wherein the gas compression unit operates according to the turbo-compressor principle.

11. Supply device (2) according to one of the preceding claims, wherein the gas flow generation installation (23) comprises a gas compression unit with a multi-stage compressor, wherein the gas compression unit operates according to the turbo-compressor principle.

12. Supply device (2) according to one of the preceding claims, wherein a superordinate control unit (27) for controlling an output stage of the gas flow generation installation (23) is present.

13. Supply device (2, 28, 33) according to one of the preceding claims, wherein sensor means for detecting and providing sensor values and for adapting a gas flow demand for providing the gas flow are present.

14. Supply device (2, 28, 33) according to one of the preceding claims, wherein the supply device (2, 28, 33) is configured as a separate peripheral unit with a housing (25) and an interior (26) of the supply device (2, 28, 33) that is surrounded by the housing (25).

15. Supply device (2, 28, 33) according to one of the preceding claims, wherein the supply device (2) is configured to be adaptable in such a manner so as to offer up elements (35) and to supply the latter from the supply device (2, 28, 33) to the processing apparatus (3), wherein the elements (35) are joining elements such as screws, rivets, punch rivets, functional elements such as stamping elements, punching elements, pressing elements, clinch-riveting elements, press-fit bolts and/or press-fit nuts.

16. Supply device (2, 28, 33) according to one of the preceding claims, wherein the supply device (2) has a filter unit (30) for filtering the gas, which serves to provide the gas flow.

17. System (1, 32) having a processing apparatus (3) for processing elements (35) and having a hollow transport line (4, 34) and a supply device (2, 28, 33) according to one of the preceding claims.

18. Processing apparatus (38) for elements (35), comprising a gas flow generation installation (40) by way of which air from the environment of the processing apparatus (38) is able to be inducted in order to provide a gas flow for transporting elements (35), wherein the gas flow generation installation (40) is designed for providing at an outlet side of the gas flow generation installation (38) a gas flow at a low-pressure level with an absolute gas pressure between 1.03 bar and 1.50 bar.

## Revendications

1. Dispositif d'alimentation (2, 28, 33) pour des éléments (35), dans lequel les éléments (35) peuvent être déplacés vers un point de raccordement (22) du dispositif d'alimentation (2, 28, 33), le dispositif d'alimentation (2, 28, 33) étant équipé, en tant qu'unité périphérique pouvant être positionnée séparément, pour l'alimentation d'un appareil de mise en œuvre (3) en éléments (35), les éléments (35) pouvant être évacués du dispositif d'alimentation (2, 28, 33) par l'intermédiaire du point de raccordement (22) et le point de raccordement (22) étant réalisé pour une liaison à une conduite de transport (4,34) creuse pouvant être raccordée au dispositif d'alimentation (2, 28, 33) de telle sorte que, dans l'état relié de la conduite de transport (4, 34), les éléments (35) peuvent être transportés dans la conduite de transport (4, 34) creuse depuis le point de raccordement (22) jusqu'à l'appareil de mise en œuvre (3) éloigné du dispositif d'alimentation (2, 28, 33), les éléments (35) pouvant être transportés au moyen d'un écoulement de gaz, le dispositif d'alimentation (2, 28, 33) présentant un dispositif de génération (23) de flux gazeux, qui met à disposition l'écoulement de gaz de telle sorte que, sur la base de l'écoulement de gaz, les éléments (35) peuvent être transportés depuis le point de raccordement (22) sur la base de l'écoulement de gaz mis à disposition par le dispositif de génération (23) de flux gazeux, le dispositif d'alimentation (2, 28, 33) se trouvant en un emplacement, le dispositif de génération (23) de flux gazeux étant réalisé pour aspirer de l'air depuis l'environnement du dispositif d'alimentation (2, 28, 33) dans l'emplacement du dispositif d'alimentation (2, 28, 33) afin de mettre à disposition l'écoulement de gaz, **caractérisé en ce que** le dispositif de génération (23) de flux gazeux est réalisé pour mettre à disposition, sur un côté sortie du dispositif de génération (23) de flux gazeux, un écoulement de gaz à un niveau basse pression présentant une pression gazeuse absolue entre 1,03 bar et 1,50 bar.

2. Dispositif d'alimentation (2, 28, 33) selon la revendication 1, dans lequel le dispositif de génération (23) de flux gazeux comprend une soufflante (29) ou un ventilateur.

3. Dispositif d'alimentation (2, 28, 33) selon l'une des revendications précédentes, dans lequel le dispositif d'alimentation (2, 28, 33) présente une section de conduite (21) creuse, à travers laquelle les éléments (35) peuvent être déplacés depuis un point de transfert (31) d'éléments, au niveau duquel les éléments (35) peuvent être introduits dans la section de conduite (21), vers le point de raccordement (22) du dispositif d'alimentation (2, 28, 33).

4. Dispositif d'alimentation (2, 28, 33) selon l'une des revendications précédentes, dans lequel les éléments pouvant être déplacés dans la section de conduite (21) peuvent être déplacés, dans l'état relié de la section de conduite (21) à la conduite de transport (4), sur la base de l'écoulement de gaz dans la section de conduite (21), les éléments depuis le point de transfert d'éléments à travers la section de conduite (21) au point de raccordement.

5. Dispositif d'alimentation (2, 28, 33) selon l'une des revendications précédentes, dans lequel le dispositif de génération (23) de flux gazeux comprend une unité de compression de gaz pour la mise à disposition de l'écoulement de gaz.

6. Dispositif d'alimentation (2, 28, 33) selon l'une des revendications précédentes, dans lequel le dispositif de génération (23) de flux gazeux comprend une unité de compression de gaz selon le principe du turbocompresseur pour la mise en disposition de l'écoulement de gaz.

7. Dispositif d'alimentation (2) selon l'une des revendications précédentes, dans lequel le dispositif de génération (23) de flux gazeux comprend une unité de compression de gaz pour la mise à disposition d'un écoulement de gaz généré côté refoulement dans la section de conduite (21).

8. Dispositif d'alimentation (2) selon l'une des revendications précédentes, dans lequel le dispositif de génération (23) de flux gazeux comprend une unité de compression de gaz pour la mise à disposition d'un écoulement de gaz généré côté aspiration dans la section de conduite (21).

9. Dispositif d'alimentation (2) selon l'une des revendications précédentes, dans lequel le dispositif de génération (23) de flux gazeux comprend une unité de compression de gaz présentant un compresseur radial pour la mise à disposition de l'écoulement de gaz, l'unité de compression de gaz fonctionnant selon le principe d'un turbocompresseur.

10. Dispositif d'alimentation (2) selon l'une des revendications précédentes, dans lequel le dispositif de génération (23) de flux gazeux comprend une unité de compression de gaz présentant un compresseur axial pour la mise à disposition de l'écoulement de gaz, l'unité de compression de gaz fonctionnant selon le principe d'un turbocompresseur.

11. Dispositif d'alimentation (2) selon l'une des revendications précédentes, dans lequel le dispositif de génération (23) de flux gazeux comprend une unité de compression de gaz présentant un compresseur à plusieurs étages, l'unité de compression de gaz fonctionnant selon le principe d'un turbocompresseur.

12. Dispositif d'alimentation (2) selon l'une des revendications précédentes, dans lequel une unité de commande (27) maître est présente pour la commande d'un niveau de puissance du dispositif de génération (23) de flux gazeux.

13. Dispositif d'alimentation (2, 28, 33) selon l'une des revendications précédentes, dans lequel des moyens de capteur pour la détection et la mise à disposition de valeurs de capteur et pour l'adaptation d'un besoin en flux gazeux pour la mise à disposition de l'écoulement de gaz sont présents.

14. Dispositif d'alimentation (2, 28, 33) selon l'une des revendications précédentes, dans lequel le dispositif d'alimentation (2, 28, 33) est réalisé comme une unité périphérique séparée présentant un boîtier (25) et un espace interne (26) du dispositif d'alimentation (2, 28, 33) entouré par le boîtier (25).

15. Dispositif d'alimentation (2, 28, 33) selon l'une des revendications précédentes, dans lequel le dispositif d'alimentation (2) est réalisé de manière adaptable de manière à disposer au préalable des éléments (35) et à les acheminer depuis le dispositif d'alimentation (2, 28, 33) vers l'appareil de mise en œuvre (3), les éléments (35) étant des éléments d'assemblage tel que des vis, des agrafes, des rivets, des éléments fonctionnels tels que des éléments de poinçonnage, des éléments à sertir, des éléments à enfoncer, des éléments de rivet aveugle, des boulons à enfoncer et/ou des écrous à enfoncer.

16. Dispositif d'alimentation (2, 28, 33) selon l'une des revendications précédentes, dans lequel le dispositif d'alimentation (2) présente un organe de filtre (30) pour la filtration du gaz qui sert à la mise à disposition de l'écoulement de gaz.

17. Dispositif (1, 32) présentant un appareil de mise en œuvre (3) pour la mise en œuvre d'éléments (35) et présentant une conduite de transport (4,34) creuse et un dispositif d'alimentation (2, 28, 33) selon l'une des revendications précédentes.

18. Appareil de mise en œuvre (38) pour des éléments (35) comprenant un dispositif de génération (40) de flux gazeux, qui permet d'aspirer de l'air depuis l'environnement de l'appareil de mise en œuvre (38) pour la mise à disposition d'un écoulement de gaz pour le transport d'éléments (35), le dispositif de génération (40) de flux gazeux étant réalisé pour mettre à disposition, sur un côté sortie du dispositif de génération (38) de flux gazeux, un écoulement de gaz à un niveau basse pression présentant une pression gazeuse absolue entre 1,03 bar et 1,50 bar.
